# EUROPÄISCHE PATENTSCHRIFT

(11) **EP 2 500 753 B1**
(45) Veröffentlichungstag und Bekanntmachung des Hinweises auf die Patenterteilung: **06.09.2017**
(21) Anmeldenummer: 12158909.7
(22) Anmeldetag: 09.03.2012
(51) Int. Cl.: G02B 6/00

(54) **Lichtleiter mit direkt Licht auskoppelnden Auskoppelelementen**
Optical fibre with decoupling elements which decouple light directly
Conducteur lumineux doté d'éléments de déclenchement déclenchés à lumière directe

(30) Priorität: 15.03.2011 DE 102011005583
(43) Veröffentlichungstag der Anmeldung: 19.09.2012
(73) Patentinhaber: Automotive Lighting Reutlingen GmbH, 72762 Reutlingen (DE)
(72) Erfinder: Zwick, Hubert, 70173 Stuttgart (DE)
(74) Vertreter: DREISS Patentanwälte PartG mbB

(56) Entgegenhaltungen:
- EP-A1- 2 045 633
- WO-A1-2008/141316
- DE-A1-102009 012 224
- US-A1- 2002 154 497
- US-A1- 2008 002 427
- US-A1- 2008 158 478
- US-B1- 7 330 632

## Beschreibung

Die vorliegende Erfindung betrifft einen Lichtleiter, nach dem Oberbegriff des Anspruch 1. Ein solcher Lichtleiter ist aus der US2002/0154497 A1 bekannt.

Lichtleiter sind in vielfältigen Ausgestaltungen bekannt und zeichnen sich dadurch aus, Licht längs einer Hauptausbreitungsrichtung nahezu verlustfrei auch über gekrümmte Wege innerhalb des Lichtleiters führen und verteilen zu können. Das Prinzip der nahezu verlustlosen Leitung basiert auf dem Phänomen der internen Totalreflexion, bei der auf eine Grenzfläche auftreffendes Licht zu nahezu 100 % reflektiert wird, solange der gegen die Flächennormale gemessene Auftreffwinkel nicht kleiner als der Grenzwinkel der Totalreflexion ist. Eine Fläche, an der solche internen Totalreflexionen auftreten und die das Licht weitgehend längs zur Hauptausbreitungsrichtung reflektieren, wird im Folgenden auch als Transportfläche bezeichnet.

Um eine gewünschte Lichtverteilung mit Hilfe des Lichtleiters zu erzeugen, muss Licht über eine Lichtaustrittsfläche des Lichtleiters ausgekoppelt werden. Dies erfolgt beim Stand der Technik dadurch, dass an einer Grenzfläche des Lichtleiters Störelemente wie prismatische oder zylindrische Kerben, eine Aufrauhung, ein Farbaufdruck oder etwas Ähnliches angebracht werden. Diese oder andere Störelemente haben die Aufgabe, das weitgehend längs der Hauptausbreitungsrichtung propagierende und auf die Störelemente auftreffende Licht quer zur Hauptausbreitungsrichtung umzulenken. Als Folge läuft das an den Störelementen reflektierte Licht von der Seite des Lichtleiters, die die Störelemente aufweist, noch einmal quer zu der Hauptausbreitungsrichtung zu der dieser Seite gegenüberliegenden Lichtaustrittsfläche des Lichtleiters. Aufgrund der vorhergehenden Umlenkung trifft ein großer Teil dieses Lichtes dort unter Winkeln zur Flächennormalen auf, unter denen es keine interne Totalreflexion mehr erfährt, sondern aus dem Lichtleiter ausgekoppelt wird.

Auf die Lichtaustrittsfläche unter hinreichend größeren Winkeln zur Flächennormalen einfallendes Licht wird dagegen nicht ausgekoppelt, sondern es erfährt an der Lichtaustrittsfläche interne Totalreflexionen. Solches Licht stammt von Reflexionen, die nicht an den genannten Störelementen, sondern an im Lichtweg vor den Störelementen liegenden Transportflächen erfolgten. Die Lichtaustrittsfläche dient insofern nicht nur der Lichtauskopplung, sondern sie dient auch als Transportfläche für die nahezu verlustlose Lichtleitung.

Diese Mehrfachfunktion der Lichtaustrittsfläche ist beim Stand der Technik auch deshalb wichtig, weil dort bereits eine der Lichtaustrittsfläche gegenüberliegende Grenzfläche mit den genannten Störelementen versehen ist und insofern als Transportfläche ausfällt. Die Transportflächenfunktion der Lichtaustrittsfläche trägt damit zu einer unter Umständen erwünschten Weiterleitung von Licht über die Störelemente hinweg bei. Ein über erste Störelemente hinweg erfolgender Transport eines Teils des Lichtes ist insbesondere dann wichtig, wenn Licht mit Hilfe von mehreren hintereinander liegenden Störelementen längs eines größeren Abschnitts der Lichtleiterlänge mit möglichst gleichmäßiger Beleuchtungsstärke ausgekoppelt werden soll.

Diese Mehrfachfunktion als Lichtaustrittsfläche und als Transportfläche schränkt die Möglichkeiten stark ein, die Form der Lichtaustrittsfläche in Bezug darauf zu optimieren, das ausgekoppelte Licht zu bündeln und/oder in bestimmte Richtungen zu lenken. Darüber hinaus kann diese Fläche aber auch nicht für ihre Funktion als Transportfläche optimiert werden, da sie gleichzeitig noch als Lichtaustrittsfläche dienen soll.

Die Aufgaben der Bündelung und Umlenkung des auszukoppelnden Lichtes in bestimmte Richtungen werden beim Stand der Technik zum Teil durch eine entsprechende Geometrie der Störelemente übernommen. Aber auch diese Geometrie ist nur in begrenztem Umfang frei wählbar, weil die Störelemente das Licht nahezu verlustlos umlenken sollen und daher die für interne Totalreflexion erforderlichen Bedingungen erfüllen müssen. Es hat sich zum Beispiel bei Lichtleitern, die in Kraftfahrzeugleuchten verwendet werden, als schwierig erwiesen, mehr als 15% des von einer Lichtquelle in den Lichtleiter eingekoppelten Lichtes in den Bereich einer gesetzlich vorgeschriebenen Lichtverteilung der Leuchte zu strahlen.

Vor diesem Hintergrund besteht die Aufgabe der Erfindung in der Angabe eines Lichtleiters, bei dem die genannten Einschränkungen der Optimierbarkeit der Form der Lichtaustrittsfläche in Bezug auf ihre Funktion, auszukoppelndes Licht zu bündeln und/oder in bestimmte Richtungen zu lenken, weniger stark ausgeprägt sind.

Diese Aufgabe wird mit den Merkmalen des Anspruchs 1 gelöst. Danach zeichnet sich die Erfindung insbesondere dadurch aus, dass das Auskoppelelement quer zu der Hauptausbreitungsrichtung aus einer Seite des Licht leitenden Volumens herausragt und dass die Lichtaustrittsfläche einen Teil der Grenzfläche des Auskoppelelements bildet.

Durch diese Merkmale wird insgesamt ein Lichtleiter bereitgestellt, der ein Licht längs einer Hauptausbreitungsrichtung leitendes Volumen aufweist und der wenigstens ein eine Grenzfläche aufweisendes Auskoppelelement aufweist. Dadurch, dass das Auskoppelelement das Licht durch eine interne Totalreflexion an seiner Grenzfläche unter einem Winkel auf eine Lichtaustrittsfläche richtet, unter dem es dort aus dem Lichtleiter austritt, wird das Licht zunächst einmal aus dem Lichtleiter ausgekoppelt. Wie eingangs erwähnt, ist dies bereits bekannt.

Neu ist insbesondere, dass die Lichtaustrittsfläche einen Teil der Grenzfläche des Auskoppelelements bildet, wobei das Auskoppelelement quer zu der Hauptausbreitungsrichtung aus einer Seite des Licht leitenden Volumens herausragt. Dadurch erfolgt die Auskopplung auf der gleichen Seite des Lichtleiters, auf der auch die das Licht zur Lichtaustrittsfläche richtende Umlenkung erfolgt. Das umgelenkte Licht wird damit insbesondere ohne einen weiteren Wechsel der Seite des Lichtleiters direkt auf der Seite des Lichtleiters, auf der es auch zu der Lichtaustrittsfläche umgelenkt wird, aus dem Auskoppelelement ausgekoppelt.

Die für die Auskopplung erforderliche Störung der in die Hauptausbreitungsrichtung erfolgenden Lichtausbreitung durch Auskoppelelemente und die tatsächliche Auskopplung über Lichtaustrittsflächen erfolgt bei der Erfindung damit auf derselben Seite des Lichtleiters. Dadurch bleibt die gegenüberliegende andere Seite frei von Störelementen, die zur Auskopplung von Licht dienen. Diese freibleibende Seite kann daher für ihre Funktion als Transportfläche optimiert werden.

Letztlich sorgt die Erfindung damit für eine räumliche Trennung der für Lichttransport und Lichtauskopplung erforderlichen Grenzflächen des Lichtleiters und erlaubt so eine verbesserte Optimierung jeder einzelnen der Grenzflächen in Bezug auf ihre Aufgabe des Lichttransports oder der Lichtauskopplung.

Die Erfindung erlaubt insbesondere eine von anderen Anforderungen freiere Gestaltung der Lichtaustrittsflächen für eine Lenkung und und/oder Bündelung des Lichtes. Damit kann zum Beispiel bei Kraftfahrzeugleuchten der Anteil des Lichtes der Lichtquelle, der zu der gewünschten Lichtverteilung beiträgt, gesteigert werden.

Eine bevorzugte Ausgestaltung sieht vor, dass ein weder zum Richten des Lichtes auf die Lichtaustrittsfläche noch als Lichtaustrittsfläche dienender Teil der Grenzfläche des Auskoppelelements dazu eingerichtet und angeordnet ist, Licht einzukoppeln, das über eine nicht als Lichtaustrittsfläche vorgesehene Grenzfläche eines vorhergehenden Auskoppelelements aus dem vorhergehenden Auskoppelelement ausgetreten ist.

Bevorzugt ist auch, dass eine Durchdringungslinie, längs der das Auskoppelement aus der Seite des Lichtleiters herausragt, ein Dreieck bildet.

Eine alternative Ausgestaltung sieht vor, dass eine Durchdringungslinie, längs der das Auskoppelement aus der Seite des Lichtleiters herausragt, ein Viereck bildet.

Eine weitere Alternative sieht vor, dass eine Durchdringungslinie, längs der das Auskoppelement aus der Seite des Lichtleiters herausragt, einen Vorsprung in einem Abschnitt der Durchdringungslinie aufweist, der weder die die Lichtaustrittsfläche bildende Grenzfläche noch die Licht auf die Lichtaustrittsfläche umlenkende Grenzfläche begrenzt.

Bevorzugt ist auch, dass eine Grenzfläche des Auskoppelelements, die weder die Lichtaustrittsfläche bildet noch die die Licht auf die Lichtaustrittsfläche umlenkende Grenzfläche bildet, unter einem kleineren Winkel als 90° aus der Seite des Lichtleiters herausragt. Alternativ oder ergänzend kann auch die Reflexionsfläche und/oder die Lichtaustrittsfläche unter anderen, insbesondere unter kleineren Winkeln als 90° aus der Seite des Lichtleiters herausragen.

Eine weitere bevorzugte Ausgestaltung zeichnet sich dadurch aus, dass der Lichtleiter dazu eingerichtet ist, in einen Parallelisierungsabschnitt des Lichtleiters eingekoppeltes Licht zu parallelisieren.

Bevorzugt ist auch, dass eine Größe der Auskoppelelemente mit zunehmender Entfernung der Auskoppelelemente von einem zur Einkopplung von Licht eingerichteten Einkoppelbereich des Lichtleiters zunimmt.

Ferner ist bevorzugt, dass eine als Lichtaustrittsfläche des Auskoppelelements dienende Grenzfläche eben ist.

Eine dazu alternative Ausgestaltung sieht vor, dass eine als Lichtaustrittsfläche des Auskoppelelements dienende Grenzfläche konvex oder konkav ist.

Bevorzugt ist auch, dass die Grenzfläche des Auskoppelelements eine erste Reflexionsfläche und eine zweite Reflexionsfläche aufweist, die relativ zu einer Durchdringungsfläche, über die das Auskoppelelement aus der Seite des Lichtleiters herausragt, und relativ zu der Lichtaustrittsfläche so angeordnet sind, dass über die Durchdringungsfläche in das Auskoppelelement eintretendes Licht, das an der ersten Grenzfläche eine interne Totalreflexion erfährt, dort so auf die zweite Grenzfläche umgelenkt wird, dass es an der zweiten Grenzfläche eine weitere interne Totalreflexion erfährt, durch die es so auf die Lichtaustrittsfläche umgelenkt wird, dass es dort aus dem Auskoppelelement austritt.

Durch diese Ausgestaltung wird eine einzige interne Totalreflexion, die das Licht in eine bestimmte Richtung umlenkt, durch zwei interne Totalreflexionen ersetzt. Der Winkel, um den die Lichtausbreitungsrichtung bei einer einzelnen internen Totalreflexion geändert wird, wird dadurch entsprechend geringer. Der Winkel der Richtungsänderung ist umso größer, je kleiner der Winkel zwischen dem auf eine Reflexionsfläche einfallenden Strahl und dem Lot auf die Reflexionsfläche ist: Dieser Winkel wird im Folgenden auch als Anstellwinkel bezeichnet. Bei senkrechtem Einfall und entsprechend senkrecht in die Gegenrichtung erfolgenden Reflexion ist der Anstellwinkel gleich = 0° und der Änderungswinkel beträgt 180°.

Eine Vergrößerung des Anstellwinkels hat eine Verringerung des Richtungsänderungswinkels zur Folge: Bei einem Anstellwinkel von 45° ergibt sich ein Änderungswinkel von 90°.

Der Wirkungsgrad, mit dem einfallende Lichtenergie bei der internen Totalreflexion reflektiert wird, hängt von dem Anstellwinkel ab. Ohne auf einzelne Werte einzugehen, kann festgestellt werden, dass der Wirkungsgrad (also der Anteil reflektierter Lichtenergie) für große Anstellwinkel sehr hoch ist und mit fallendem Anstellwinkel teilweise dramatisch abnimmt. Die Abhängigkeit des Wirkungsgrades vom Anstellwinkel ist unerwünscht, weil dieser Anstellwinkel auch die Richtung definiert, in welche das Licht letztlich abgestrahlt wird und weil die Lage des Lichtleiters in der Beleuchtungseinrichtung aus technischen und gestalterischen Gründen in aller Regel nicht frei wählbar ist. Gesetzliche Anforderungen legen auf der anderen Seite bestimmte Abstrahlrichtungen fest.

Die Ausgestaltung mit den beiden Reflexionsflächen hat in diesem Zusammenhang den Vorteil, dass die geschilderte Abhängigkeit des Wirkungsgrades vom Anstellwinkel der total reflektierenden Fläche und damit von der Einbausituation im Fahrzeug eliminiert wird. Die erfolgt dadurch, dass eine einzige interne Totalreflexion mit großem Änderungswinkel der Strahlrichtung durch interne Totalreflexionen mit jeweils kleineren Änderungswinkeln der Strahlrichtung ersetzt wird. Dadurch können die Winkel so gewählt werden, dass der Wirkungsgrad bei jeder Reflexion sehr hoch ist.

Dabei ist bevorzugt, dass das Auskoppelement dazu eingerichtet ist, die Reflexionen des Lichtes an der ersten Reflexionsfläche und an der zweiten Reflexionsfläche so erfolgen zu lassen, dass der Winkel zwischen dem Lot auf die jeweilige Reflexionsfläche und einem mittleren Strahl eines auf die jeweilige Reflexionsfläche einfallenden Lichtbündels in einem Winkelintervall liegt, in dem bei der Reflexion auftretende Verluste an Lichtenergie kleiner als 25%, insbesondere kleiner als 10 % sind.

Dies wird dadurch erreicht, dass der Winkel größer als 45°, insbesondere größer als 50°, insbesondere größer als 55° ist.

Für sehr große Anstellwinkel, zum Beispiel für einen Anstellwinkel von 75°, wird das gesamte Licht zwar total reflektiert (100%), ein großer Anteil dieses Lichts trifft im Folgenden jedoch unter einem Winkel auf die Austrittsfläche, der die Bedingung für Totalreflexion erfüllt und deshalb erneut gespiegelt wird. Dieses "Hin - und Her schaukeln" kann sich mehrfach wiederholen, bis an einer der beiden Flächen die Bedingung für die Totalreflexion verletzt wird. Dann tritt das Licht in völlig unkontrollierter Weise aus und ist im allgemeinen nicht geeignet, zum Erfüllen der gesetzlichen Vorgaben beizutragen.
Dieser Nachteil wird durch eine weitere bevorzugte Ausgestaltung vermieden, die sich dadurch auszeichnet, dass der Anstellwinkel kleiner als 75° ist.

Die für große und kleine Anstellwinkel einer einzigen Reflexionsfläche geringen Wirkungsgrade können durch diese Ausgestaltungen insgesamt sehr stark angehoben werden, wobei die Anhebung ohne weiteres bis zu Wirkungsgraden von nahe 100% gesteigert werden kann.

Eine bevorzugte Verwendung eines erfindungsgemäßen Lichtleiters erfolgt bei einer Kraftfahrzeugleuchte, die entweder zur Beleuchtung des Innenraums des Kraftfahrzeugs dient oder die Signalfunktionen für andere Verkehrsteilnehmer erfüllt.

Bevorzugt ist auch, dass eine solche Kraftfahrzeugleuchte als Bugleuchte oder als Heckleuchte verwendet wird.

Ferner ist bevorzugt, dass die Kraftfahrzeugleuchte als Bugleuchte verwendet wird, die in einen Frontscheinwerfer eines Kraftfahrzeugs integriert ist.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in der jeweils angegeben Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Dabei zeigen, jeweils in schematischer Form:
- Figur 1: eine perspektivische Darstellung eines Beispiels eines exemplarischen Lichtleiters;
- Figur 2: eine Vorderansicht des Gegenstands der Fig. 1;
- Figur 3: eine Draufsicht auf den Gegenstand der Fig. 1;
- Figur 4: eine Seitenansicht des Gegenstandes der Fig 1;
- Figur 5: ein weiteres Beispiel eines exemplarischen Lichtleiters;
- Figur 6: noch ein weiteres Beispiel in einer perspektivischen Darstellung;
- Figur 7: eine Draufsicht auf den Gegenstand der Fig. 6;
- Figur 8: eine Vorderansicht des Gegenstands der Fig. 6;
- Figur 9: noch ein weiteres Beispiel eines exemplarischen Lichtleiters in einer perspektivischen Darstellung;
- Figur 10: eine Vorderansicht des Gegenstandes der Figur 9;
- Figur 11: eine Ausgestaltung des Gegenstandes der Figuren 1 bis 4; und
- Figur 12: verschiedene Ausgestaltungen von Auskoppelelementen exemplarischer Lichtleiter.
- Figur 13: ein sehr vereinfachtes Modell eines Lichtleiters mit einem ersten Anstellwinkel einer Reflexionsfläche;
- Figur 14: ein Modell eines Lichtleiters mit einem zweiten Anstellwinkel einer Reflexionsfläche;
- Figur 15: eine Draufsicht auf ein Ausführungsbeispiel eines erfindungsgemäßen Lichtleiters;
- Figur 16: eine Ausgestaltung des Lichtleiters aus der Fig. 15;
- Figur 17: einen Lichtleiter mit einer konvex gekrümmten Lichtaustrittsfläche seines Auskoppelelements;
- Figur 18: den Lichtleiter aus der Figur 15 aus einer veränderten Blickrichtung;
- Figur 19: eine Orts-Winkel-Abhängigkeit des ausgekoppelten Lichtes beim Durchtritt durch die Lichtaustrittsfläche;
- Figur 20: eine Ausgestaltung mit einer bündelnden Lichtaustrittsfläche;
- Figur 21: eine Schrägansicht einer zweifach im Raum konvex gekrümmten Lichtaustrittsfläche eines neuartigen Lichtauskoppelelements; und
- Figur 22: einen Lichtleiter mit einer Vielzahl der neuartigen Auskoppelelemente.

Dabei bezeichnen gleiche Bezugszeichen in verschiedenen Figuren jeweils gleiche oder zumindest ihrer Funktion nach gleiche Elemente.

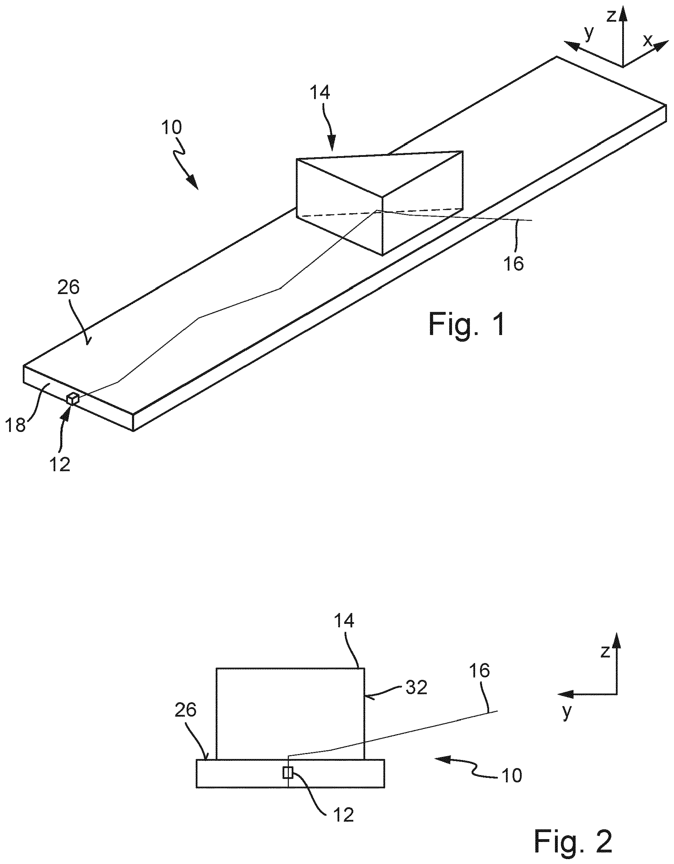

Im Einzelnen zeigen die Figuren 1 bis 4 einen Lichtleiter 10, eine Lichtquelle 12, ein Auskoppelelement 14 des Lichtleiters und einen Lichtstrahl 16. Die Lichtquelle 12 ist bevorzugt eine Halbleiterlichtquelle, die Licht in einen Halbraum abstrahlt. Sie ist bevorzugt dicht vor einer Lichteintrittsfläche 18 des Lichtleiters 10 angeordnet, so dass der größte Teil des von ihr emittierten Lichtes in das Volumen des Lichtleiters 10 eingekoppelt wird. Das eingekoppelte Licht breitet sich dort um eine Hauptausbreitungsrichtung herum aus, die durch die Geometrie des Lichtleiters vorgegeben wird. Die um die Hauptausbreitungsrichtung herum erfolgende Ausbreitung des Lichtes ergibt sich durch interne Totalreflexionen des Lichtes an Grenzflächen des Lichtleiters. Mit solchen Totalreflexionen wird aus dem Volumen heraus auf die Grenzflächen auftreffendes Licht in das Volumen zurückreflektiert. In dem dargestellten Ausführungsbeispiel entspricht die Hauptausbreitungsrichtung der x-Richtung, da der langgestreckte Lichtleiter 10 längs dieser x-Richtung ausgerichtet ist.

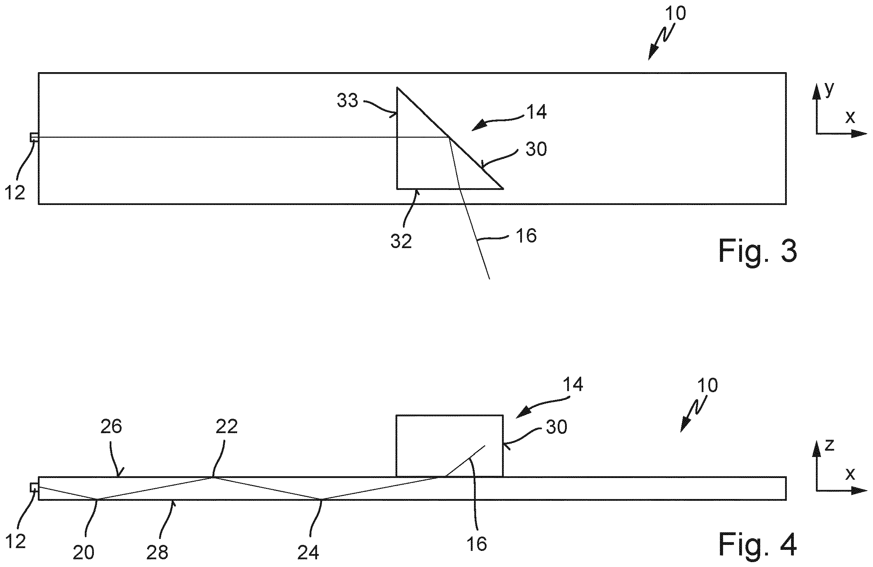

Ein als Beispiel betrachteter Lichtstrahl 16 der Lichtquelle 12 tritt über die Lichteintrittsfläche 18 in das Volumen des Lichtleiters 10 ein und besitzt dabei zunächst Richtungskomponenten in x-Richtung und z-Richtung. Die in der Figur 3 dargestellte Draufsicht zeigt, dass der Lichtstrahl 16 zunächst in x-Richtung geradlinig verläuft. Die in der Figur 4 dargestellte Seitenansicht zeigt, wie der Lichtstrahl 16 dabei durch interne Totalreflexionen 20, 22, 24, die an als Transportflächen dienenden Bereichen von Seiten 26, 28 des Lichtleiters 10 erfolgen, an das Volumen des Lichtleiters 10 gebunden bleibt und in diesem Volumen um die Hauptausbreitung x herum weiterläuft. Dabei erreicht der Lichtstrahl 16 das Auskoppelelement 14.

Wie die Figuren 1, 2 und 4 zeigen, ragt das Auskoppelelement 14 quer zu der Hauptausbreitungsrichtung x aus einer Seite 26 des lichtleitenden Volumens des Lichtleiters 10 heraus. Das Auskoppelelement 14 ist bevorzugt ein Teil des Lichtleiters 10, so dass das Volumen des Lichtleiters 10 in das Volumen des Auskoppelelements 14 übergeht, ohne dass sich zwischen diesen beiden Volumina eine Grenzfläche ausbildet. Als Folge tritt Licht, wie das Licht des Lichtstrahls 16, zunächst in das aus der Seite 26 herausragende Volumen des Auskoppelelements 14 ein. Dies ist insbesondere aus der Figur 4 ersichtlich.

Das Auskoppelelement 14 besitzt in der Ausgestaltung, die in der Fig. 3 dargestellt ist, eine dreieckige, von Geraden begrenzte Grundfläche, die insbesondere aus den Figuren 1 und 3 ersichtlich ist. Im dargestellten Ausführungsbeispiel handelt es sich um ein rechtwinkliges Dreieck, ohne dass die Erfindung auf eine solche, spezielle Geometrie beschränkt ist. Das über die dreieckige Grundfläche aus dem übrigen Lichtleiter 10 in das Auskoppelelement 14 eingetretene Licht wird anschließend von der über der Hypotenuse der dreieckigen Grundfläche stehenden Grenzfläche 30 reflektiert, wobei diese Reflexion bevorzugt eine interne Totalreflexion ist. Für eine solche Reflexion ist keine reflektierende Beschichtung der Grenzfläche 30 erforderlich.

Im Rahmen einer dazu alternativen oder ergänzenden Ausgestaltung ist die Grenzfläche 30 mit einem reflektierenden Material beschichtet. Das reflektierende Material ist bevorzugt eine dünne Metallschicht. Mit dieser Ausgestaltung kann auch noch Licht reflektiert werden, das die Bedingungen einer internen Totalreflexion an der Grenzfläche 30 nicht erfüllt. Gegenüber einer Ausgestaltung, die keine reflektierende Beschichtung vorsieht, müssen bei der Ausgestaltung mit der reflektierenden Beschichtung jedoch Energieverluste des Lichtes in Kauf genommen werden.

In jedem Fall wird das aus dem Volumen des Lichtleiters 10 auf die Grenzfläche 30 einfallende Licht dort so umgelenkt, dass es in einem steilen Winkel auf eine weitere Grenzfläche 32 fällt, die im dargestellten Ausführungsbeispiel parallel zu einer Längsseite des Lichtleiters 10 ausgerichtet ist. Dabei wird unter einem steilen Winkel hier jeder Winkel zwischen dem einfallenden Lichtstrahl und der Flächennormalen der Grenzfläche 32 verstanden, der kleiner als der Grenzwinkel der internen Totalreflexion ist. Das bedeutet, dass das unter steilen Winkeln auf die weitere Grenzfläche 32 einfallende Licht dort keine internen Totalreflexionen erfährt, sondern dass es über die weitere Grenzfläche 32 aus dem Auskoppelelement 14 und damit aus dem Lichtleiter 10 austritt.

Die weitere Grenzfläche 32 stellt insofern eine Lichtaustrittsfläche des Lichtleiters 10 dar. Die Grenzfläche 30 stellt dagegen ein Störelement dar, das einfallendes Licht so umlenkt, dass das umgelenkte Licht beim nächsten Auftreffen auf eine Grenzfläche des Lichtleiters 10 ausgekoppelt wird. Die Grenzfläche 30 bildet zusammen mit der weiteren Grenzfläche 32 zumindest einen Teil der Grenzfläche des Auskoppelelements 14. Das in den Figuren 1 bis 4 dargestellte Ausführungsbeispiel zeichnet sich insbesondere dadurch aus, dass das Auskoppelelement 14 aus einer Seite 26 des lichtleitenden Volumens des Lichtleiters 10 herausragt und dass die Lichtaustrittsfläche 32 einen Teil der Grenzfläche des Auskoppelelements 14 bildet. Die als Störelement dienende Grenzfläche 30 und die als Lichtaustrittsfläche dienende weitere Grenzfläche 32 liegen auf derselben Seite 26 des Lichtleiters 10.

Die verbleibende Grenzfläche 33, die in der Figur 3 über eine Kathete der Grundfläche des Auskoppelelements 14 liegt, hat dagegen für das Auskoppeln des von links her propagierenden Lichtes keine Bedeutung.

Die Grundfläche des Auskoppelelements 14 liegt in der Seite 26 des Lichtleiters 10. Die äußere Form der Einheit aus dem Auskoppelelement 14 und dem Lichtleiter 10 entsteht gewissermaßen dadurch, dass die Form des Auskoppelelements 14 gedanklich auf die Seite 26 aufgesetzt wird und dadurch die Grundfläche definiert. Diese Überlegung dient jedoch lediglich der Veranschaulichung der Grundfläche. Reale Lichtleiter werden bevorzugt als einstückige bauliche Einheiten aus einem oder mehreren Auskoppelelementen 14 mit dem übrigen lichtleitenden Volumen des Lichtleiters 10 hergestellt.

Wenn diese in der Seite 26 dienende Grundfläche beim Stand der Technik als Lichtaustrittsfläche dienen sollte, müsste ein auf der gegenüberliegenden Seite 28 liegender Flächenbereich Störelemente aufweisen, die das Licht steil zu der in der Seite 26 liegenden Grundfläche hin umlenken würden.

Dieser in der Seite 28 liegende Flächenbereich könnte daher beim Stand der Technik nicht oder nur sehr eingeschränkt als Transportfläche dienen.

Um dies zu kompensieren, müsste die in der Seite 26 liegende Grundfläche beim Stand der Technik nicht nur die Funktion als Lichtaustrittsfläche erfüllen, sondern sie müsste zusätzlich auch noch als Transportfläche dienen.

Dies ist bei der Erfindung nicht der Fall. Bei der Erfindung kann der genannte Flächenbereich der Seite 28 von Störelementen freibleiben und so als Transportfläche dienen.

Die bei der Erfindung aus der Seite 26 herausragende und als Lichtaustrittsfläche dienende weitere Grenzfläche 32 hat keine Funktion als Transportfläche zu erfüllen und kann daher beliebig für die Umlenkung und Bündelung des ausgekoppelten Lichtes optimiert werden.

Diese räumliche Trennung der für Lichttransport und Lichtauskopplung erforderlichen Grenzflächen des Lichtleiters erlaubt eine verbesserte Optimierung jeder einzelnen der Grenzflächen in Bezug auf ihre Aufgabe des Lichttransports oder der Lichtauskopplung.

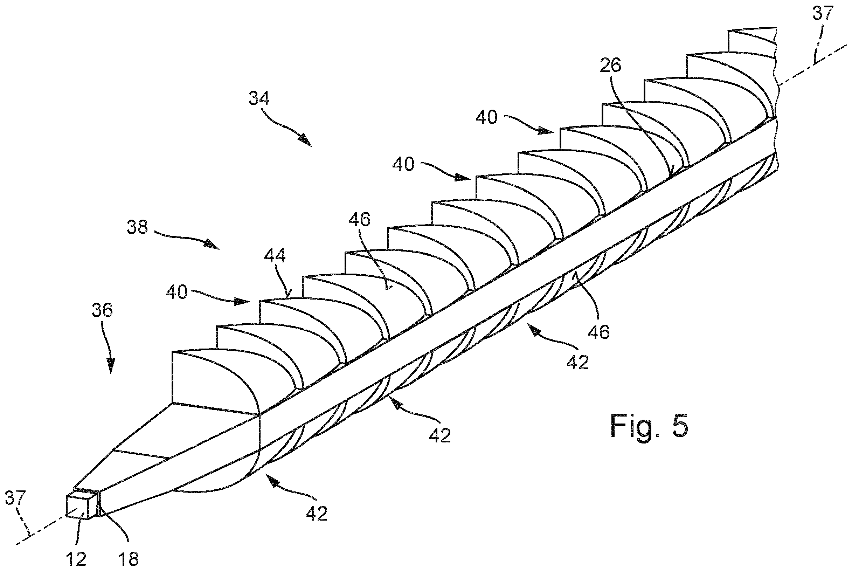

Figur 5 zeigt einen Lichtleiter 34 als weiteres Ausführungsbeispiel der Erfindung zusammen mit einer Lichtquelle 12. Der Lichtleiter 34 weist einen Parallelisierungsabschnitt 36 und einen Transport- und Auskoppelabschnitt 38 auf. Der Parallelisierungsabschnitt 36 liegt im Lichtweg zwischen der Lichtquelle 12 und dem Transport- und Auskoppelabschnitt 38 und besitzt eine Lichteintrittsfläche 18, die einen vergleichsweise kleineren Lichteintrittsquerschnitt aufweist. Von der Lichteintrittsfläche 18 ausgehend vergrößert sich der Querschnitt des Parallelisierungsabschnitts 36 bis zu einem vergleichsweise größeren Übergangsquerschnitt, mit dem der Parallelisierungsabschnitt 36 in den Transport- und Auskoppelabschnitt 38 übergeht. Dabei beziehen sich die Angaben "vergleichsweise größer" und "vergleichsweise kleiner" jeweils auf einen Vergleich des genannten Lichteintrittsquerschnitts mit dem genannten Übergangsquerschnitt.

Durch die Querschnittsvergrößerung sind Flächennormalen von Seitenflächen des Parallelisierungsabschnitts 36 nicht rechtwinklig zu einer optischen Achse 37 des Lichtleiters 10, sondern sie weisen gegenüber einer rechtwinkligen Anordnung eine Neigung auf. Aufgrund des Umstandes, dass der gegenüber der Flächennormalen gemessene Einfallswinkel des von innen auf die Seitenflächen des Parallelisierungsabschnitts 36 einfallenden Lichtes gleich dem Ausfallswinkel des dort reflektierten Lichtes ist, ergibt sich, dass sich der Winkel, den das Licht mit der optischen Achse bildet, bei der Reflexion verändert.

Die Veränderung erfolgt dabei so, dass der Winkel sich verringert. Als Folge wird das im Parallelisierungsabschnitt 36 propagierende Licht mit jeder inneren Totalreflexion etwas paralleler. Durch diese Parallelisierung tritt entsprechend paralleles Licht über den Übergangsquerschnitt in den Transport- und Auskoppelabschnitt 38 ein. Als Folge tritt auszukoppelndes Licht unter ähnlichen Winkeln, also ebenfalls bis zu einem gewissen Grad parallelisiert, in die Auskoppelelemente 40 und 42 ein, die beim Gegenstand der Figur 3 auf gegenüberliegenden und zueinander parallelen Seiten eines sich geradlinig erstreckenden und damit nicht gekrümmt verlaufenden Transport- und Auskoppelabschnitts 38 mit einem rechteckigen Querschnitt angeordnet sind.

Die Auskoppelelemente 40, 42 sind dabei bevorzugt so angeordnet, dass sie Licht über den im Zusammenhang mit den Figuren 1 bis 4 erläuterten Strahlengang des Lichtstrahls 16 auskoppeln. Das heißt insbesondere, dass die in der Figur 5 sichtbare Kante 44 eine als Störelement dienende Fläche des Auskoppelelements 40 begrenzt und dass die Fläche 46 eine Lichtaustrittsfläche des Auskoppelelements 40 (und/oder 42) und damit eine Auskoppelfläche des Lichtleiters 34 darstellt.

Die gesamte Lichtaustrittsfläche des Lichtleiters 34 ergibt sich als Summe sämtlicher Lichtaustrittsflächen 46 seiner Auskoppelelemente 40 und 42. Dies gilt im Übrigen auch für die übrigen in dieser Anmeldung vorgestellten Ausgestaltungen.

Wie bereits erläutert wurde, erlaubt die Erfindung eine Optimierung der Geometrie der Lichtaustrittsflächen 46, die mit Blick auf die zu erzielende Lichtverteilung des ausgekoppelten Lichtes erfolgt. In der Ausgestaltung, die in der Figur 5 dargestellt ist, handelt es sich um fokussierende Lichtaustrittsflächen 46. Die Fokussierung wird bevorzugt dadurch erreicht, dass die fokussierenden Lichtaustrittsflächen 46 einen Ausschnitt aus der Fläche eines dreiachsigen Ellipsoids bilden, dessen Halbachsen a, b und c jeweils paarweise ungleich sind.

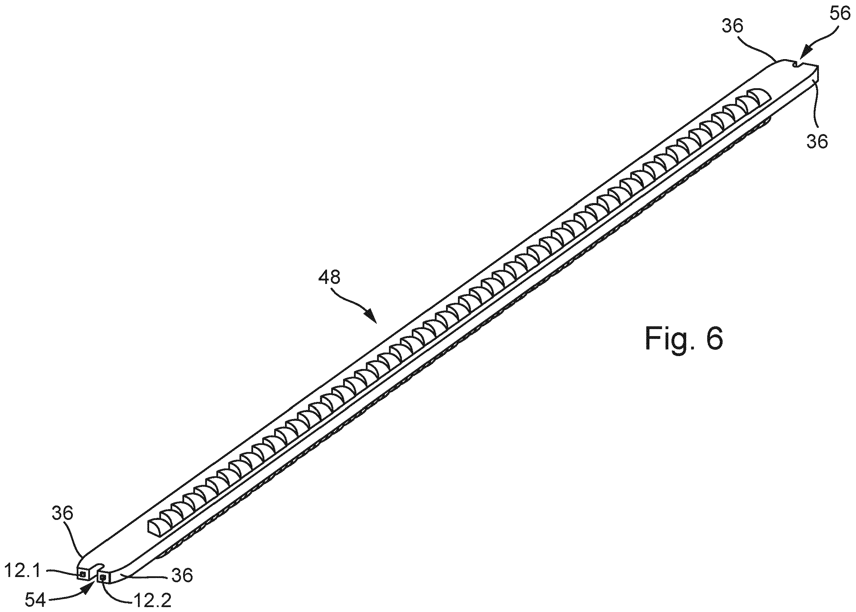

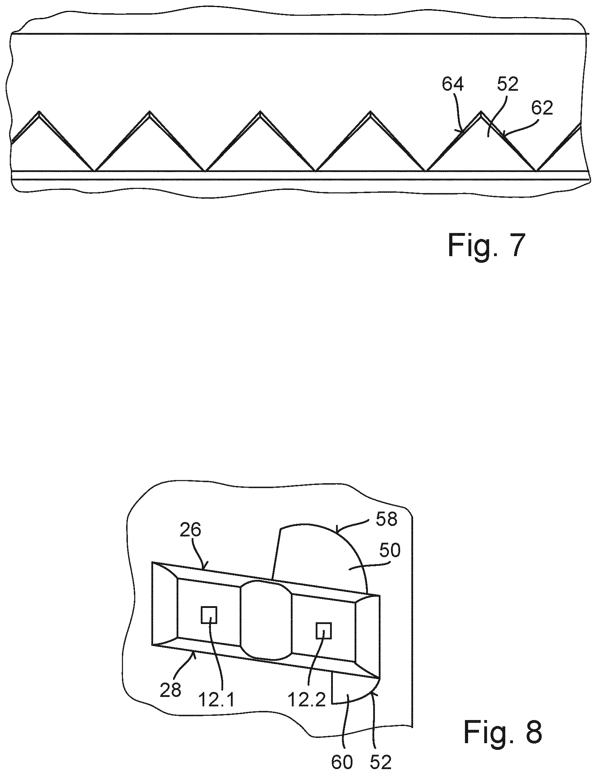

Die Figuren 6, 7 und 8 beziehen sich auf ein weiteres Ausführungsbeispiel eines erfindungsgemäßen Lichtleiters 48. Der Lichtleiter 48 besitzt, wie auch der Lichtleiter 10 und der Lichtleiter 34, eine langgestreckte und geradlinig verlaufende Form mit einem rechteckigen Querschnitt, aus dem Auskoppelelemente 50 und 52 herausragen. Dies ist in der Fig. 8 dargestellt. Der Lichtleiter 48 weist zwei Enden 54 und 56 auf, an denen jeweils zwei Lichtquellen 12.1 und 12.2 angeordnet sind. Der Lichtleiter 48 wird daher von jedem seiner beiden Enden mit Licht gespeist. Das Licht jeder Lichtquelle 12.1, 12.2 wird in einem der jeweiligen Lichtquelle zugeordneten Parallelisierungsabschnitt 36 parallelisiert, so wie es im Zusammenhang mit der Figur 5 erläutert worden ist.

Die Auskoppelelemente 50 und 52 besitzen unterschiedliche Größen. Sowohl die fokussierenden Lichtaustrittsflächen 58 der auf einer Seite 26 angeordneten, größeren Auskoppelelemente 50, als auch die Lichtaustrittsflächen 60 der auf der gegenüberliegenden Seite 28 angeordneten und vergleichsweise kleineren Auskoppelelemente 52 sind bei dieser Ausgestaltung jeweils Ausschnitte aus Zylinderflächen.

Abweichend von der erwähnten Rechteckform, kann der Querschnitt des Lichtleiters 48 auch eine Rautenform aufweisen, wie sie in der Figur 8 dargestellt ist.

Figur 7 zeigt eine Draufsicht auf Auskoppelelemente 50 oder 52 des Lichtleiters 48 aus einer Perspektive, die der Draufsicht-Perspektive aus der Figur 3 vergleichbar ist. Bei einem Vergleich der Gegenstände der Figuren 7 und 3 fällt auf, dass man sich die einzelnen Auskoppelelemente 52 beim Gegenstand der Figur 7 jeweils als aus zwei Hälften zusammengesetzt vorstellen kann, wobei jede Hälfte in ihrer Draufsicht dem Umriss aus der Figur 3 entspricht. Diese Abweichung der Form des Auskoppelelements 52 beim Gegenstand der Figur 7 von der Form des Auskoppelelements 14 beim Gegenstand der Figur 3 berücksichtigt, dass das Licht beim Gegenstand der Figur 7 von beiden Seiten, das heißt in der Draufsicht der Figur 7 sowohl von rechts als auch von links, durch den Lichtleiter 48 propagiert, während das Licht beim Gegenstand der Figur 3 nur von links durch den Lichtleiter 10 propagiert.

Figur 3 zeigt auch, dass für die Auskopplung sowohl die Fläche des Störelements 30 als auch die als Lichtaustrittsfläche dienende Grenzfläche 32 von Bedeutung ist. Die verbleibende Grenzfläche 33 des in der Fig. 3 in einer Draufsicht dargestellten Auskoppelelements 14 hat dagegen für das Auskoppeln des beim Gegenstand der Fig. 3 von links her propagierenden Lichtes keine Bedeutung.

Diese Fläche kann daher so umgestaltet werden, dass sie für von rechts durch den Lichtleiter propagierendes Licht ein Störelement darstellt. Die Störfläche 62 des Auskoppelelements 52 des Gegenstands der Figur 7 dient damit der Auskopplung des von links kommenden Lichtes, während die Störfläche 64 für die Auskopplung des von rechts kommenden Lichtes dient.

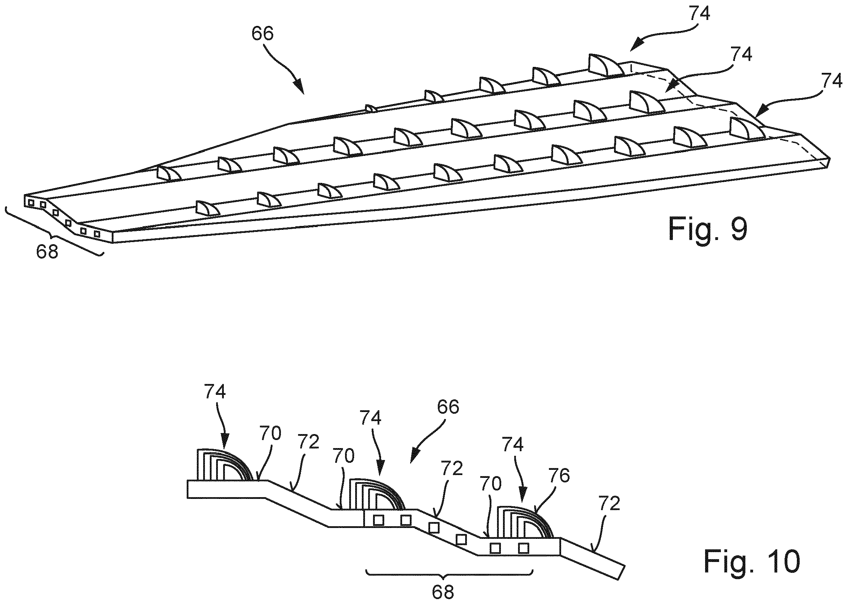

Die Figuren 9 und 10 stellen Ansichten eines terrassenförmigen Lichtleiters 66 dar, der von einer Seite her mit einer Anordnung 68 aus n = 6 Lichtquellen mit Licht gespeist wird. Die Zahl n kann auch andere Werte als 6 annehmen, wobei Werte von 1 kleiner oder gleich n kleiner gleich 30 bevorzugt sind. Figur 9 zeigt eine perspektivische Ansicht eines solchen Lichtleiters 66, und die Figur 10 zeigt eine Ansicht der Lichteintrittsfläche des Lichtleiters 66 im Profil.

Der Lichtleiter 66 weist erste Flächen 70 auf, die zueinander parallel sind und die in der Darstellung der Figur 10 horizontal angeordnet sind.

Darüber hinaus weist der Lichtleiter 66 zweite Flächen 72 auf, von denen jede schrägliegend zwischen zwei ersten Flächen 70 angeordnet ist, so dass die zwei ersten Flächen 70 parallel sind, aber nicht in der gleichen Ebene liegen. Die zweiten Flächen 72 sind in einer Ausgestaltung untereinander parallel. In einer anderen Ausgestaltung liegen Sie nicht parallel zueinander.

Auskoppelelemente 74 sind jeweils in horizontalen Bereichen der ersten Flächen angeordnet. Die fokussierenden Lichtaustrittflächen 76 sind hier Kugelflächenabschnitte. Die Auskoppelelemente 74 sind entlang der ersten Fläche 70 bevorzugt äquidistant angeordnet. Die Größe der Auskoppelelemente 74 wächst in einer bevorzugten Ausgestaltung mit Ihrer Entfernung von der Anordnung 68 von Lichtquellen an. Dadurch wird der Umstand berücksichtigt, dass die Lichtstromstärke des in dem Lichtleiters 66 propagierenden Lichtes mit zunehmender Entfernung von der Anordnung 68 von Lichtquellen abnimmt. Diese Abnahme hat zwei Ursachen. Eine erste Ursache liegt darin, dass sich das Volumen des Lichtleiters 66 in der Ausgestaltung, die in den Figuren 9 und 10 dargestellt ist, mit zunehmender Entfernung von der Anordnung 68 von Lichtquellen vergrößert. Eine zweite Ursache liegt darin, dass die Auskoppelelemente 74, die näher an der Anordnung 68 von Lichtquellen liegen, den weiter entfernten Auskoppelelementen 74 gewissermaßen Licht wegnehmen, indem sie es aus dem Lichtleiter 66 auskoppeln.

Die Auswirkungen beider Ursachen können mit einer Vergrößerung der Auskoppelelemente 74 verringert, kompensiert oder sogar überkompensiert werden, bei der die Größe der Auskoppelelemente 74 mit zunehmender Entfernung von der Anordnung 68 von Lichtquellen anwächst. Bei einer Kompensation ergibt sich zum Beispiel eine homogene Helligkeitsverteilung der leuchtenden und fokussierenden wirkenden Lichtaustrittsflächen 76 der verschiedenen Auskoppelelemente 74.

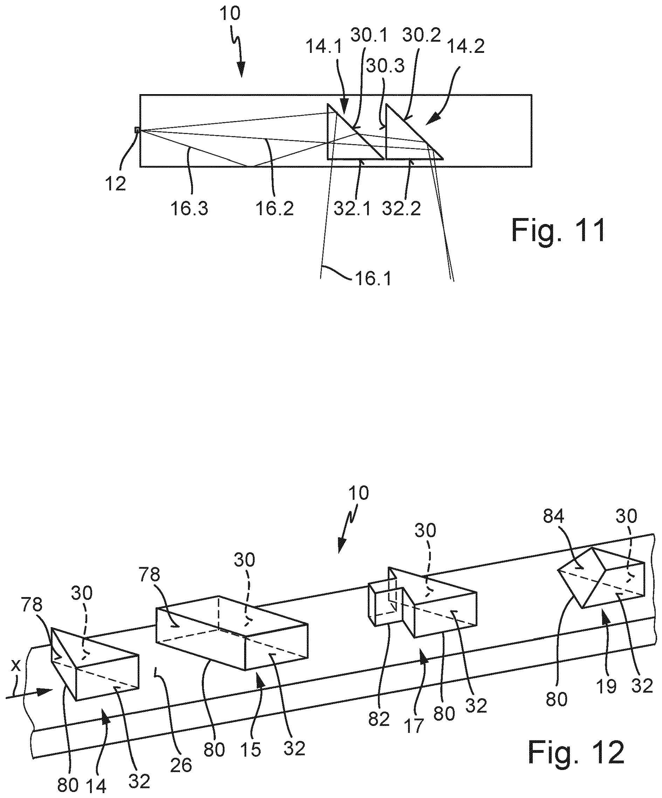

Figur 11 zeigt einen Vorteil, der sich durch die Hintereinander-Anordnung von Auskoppelelementen 14.1 und 14.2 längs eines Ausführungsbeispiels eines erfindungsgemäßen Lichtleiters 10 ergibt. Abgesehen davon, dass die Figur 11 zwei Auskoppelelemente 14.1 und 14.2 zeigt, entspricht die Darstellung der Figur 11 der Darstellung der Figur 3. Bei den Auskoppelelementen 14.1 und 14.2 handelt es sich insbesondere um Auskoppelelemente, wie sie als Auskoppelelement 14 im Zusammenhang mit den Figuren 1 bis 4 erläutert worden sind. Der Lichtstrahl 16.1 tritt auf die im Zusammenhang mit dem Strahl 16 an Hand der Figuren 1 bis 4 erläuterte Weise in das Auskoppelelement 14 ein und wird an dessen Grenzfläche 30.1, die als Störelement dient, zur weiteren Grenzfläche 32.1 umgelenkt. Dort trifft der reflektierte Lichtstrahl 16.1 in einem so steilen Winkel auf, dass er keine interne Totalreflexion mehr erfährt, sondern über die dann als Lichtaustrittsfläche dienende weitere Grenzfläche 32.1 aus dem Lichtleiter 10 ausgekoppelt wird.

Ganz analog wird der Lichtstrahl 16.2 in das zweite Auskoppelelement 14.2 eintreten, an dessen Grenzfläche 30.2 umgelenkt und über dessen weitere Grenzfläche 32.2 aus dem Lichtleiter 10 ausgekoppelt werden. Insofern ergibt sich noch kein Unterschied zum Gegenstand der Figuren 1 bis 3.

Ein Unterschied ergibt sich jedoch, wenn man den Verlauf des Lichtstrahls 16.3 verfolgt. Dieser Lichtstrahl 16.3 tritt nach einer einmaligen Reflexion, die an einer Wand des Lichtleiters 10 erfolgt, in das erste Auskoppelelement 14.1 ein und trifft dort unter einem steilen Winkel auf die als Störelement dienende Grenzfläche 30.1 auf. Dabei wird unter einem steilen Winkel ein Winkel verstanden, der zwischen dem Strahl und der Flächennormalen liegt und kleiner als der Grenzwinkel der internen Totalreflexion ist. Der Strahl 16.3 wird daher an der Grenzfläche 30.1 nicht innerhalb des ersten Auskoppelelements 14.1 umgelenkt, sondern er wird aus der Grenzfläche 30.1 ausgekoppelt.

Aufgrund der Tatsache, dass hinter dem ersten Auskoppelelement 14.1 wenigstens ein weiteres Auskoppelelement 14.2 angeordnet ist, geht der Lichtstrahl 16.3 jedoch nicht verloren, sondern er wird über eine dritte Grenzfläche 30.3 in das zweite Auskoppelelement 14.2 eingekoppelt und von diesem durch eine Reflexion an der als Störelement dienenden weiteren Grenzfläche 30.2 so umgelenkt, dass auch der Lichtstrahl 16.3 in gewünschter Weise über eine Lichtaustrittsfläche, hier über die Grenzfläche 32.2 des Auskoppelelements 14.2, ausgekoppelt wird. Dabei erfolgt die Auskopplung insbesondere so, dass auch der Lichtstrahl 16.3 zur Erzeugung einer gewünschten Lichtverteilung beiträgt.

Figur 12 zeigt verschiedene Ausgestaltungen von Auskoppelelementen 14, 15, 17 und 19, die aus einer Seite 26 eines Lichtleiters 10 herausragen.

Ganz links ist ein Auskoppelelement 14 dargestellt, wie es bereits in dem Zusammenhang mit den Figuren 1 bis 4 erläutert worden ist. Dieses Auskoppelelement 14 zeichnet sich unter anderem dadurch aus, dass eine Durchdringungslinie 80, längs der das Auskoppelelement 14 aus der Seite 26 des Lichtleiters 10 herausragt, ein Dreieck bildet. Bei dem Dreieck handelt es sich in einer bevorzugten Ausgestaltung um ein rechtwinkliges Dreieck.

Der Abschnitt der Durchdringungslinie 80 unter der Lichtaustrittsfläche 32 liegt bevorzugt schräg zu den beiden anderen Abschnitten der Durchdringungslinie 80, wobei seine Lage durch die Forderung bestimmt wird, dass die Grenzfläche 30 auf sie einfallendes Licht zu der als Lichtaustrittsfläche dienenden Grenzfläche 32 umlenken soll. Die Durchdringungslinie 80 umschließt eine Grundfläche 78, über der das Auskoppelelement 14 aus der Seite 26 des Lichtleiters 10 herausragt.

Die Grundfläche des Auskoppelelements 15 wird ebenfalls durch eine Durchdringungslinie 80 begrenzt. Das Auskoppelelement 15 unterscheidet sich vom Auskoppelelement 14 insbesondere dadurch, dass die Grundfläche 78 des Auskoppelelements 15 viereckig ist, während sie beim Auskoppelelement 14 dreieckig ist.

Ein Abschnitt der Durchdringungslinie 80, längs dem die als Lichtaustrittsfläche dienende Grenzfläche 32 aus dem Lichtleiter 10 herausragt, liegt bevorzugt parallel zu einer Hauptausbreitungsrichtung x des Lichtes. Der Abschnitt der Durchdringungslinie 80, der weder die die Lichtaustrittsfläche bildende Grenzfläche 32 noch die Licht auf die Lichtaustrittfläche 32 umlenkende Grenzfläche 30 begrenzt, liegt bevorzugt quer zur Hauptausbreitungsrichtung x des Lichtes im Lichtleiter 10.

Die viereckige Grundfläche 78 des Auskoppelelements 15 ist insbesondere größer als die dreieckige Grundfläche des Auskoppelelements 14. Die Menge des vom übrigen Lichtleiter über die Grundfläche 78 in das darüber liegende Auskoppelelement eintretenden Lichtes wächst mit zunehmender Größe der Grundfläche 78. Aufgrund der im Vergleich zur Grundfläche des Auskoppelelements 14 größeren Grundfläche 78 des Auskoppelelements 15 ist die in das Auskoppelelement 15 eintretende Lichtmenge unter sonst gleichen Bedingungen größer als die in das Auskoppelelement 14 eintretende Lichtmenge.

Unter der Voraussetzung, dass die Lichtaustrittsflächen 32 der beiden Lichtauskoppelelemente 14 und 15 gleich groß sind, ist dann auch die Lichtmenge, die über die als Lichtaustrittsfläche dienende Grenzfläche 32 des Auskoppelelements 15 ausgekoppelt wird, größer als die entsprechende Lichtmenge, die aus der als Lichtaustrittsfläche dienenden Grenzfläche 32 des Auskoppelelement 14 ausgekoppelt wird.

Entsprechend wird die Grenzfläche 32 des Auskoppelelements 15 bei gleichem Lichtstrom im Lichtleiter 10 heller erscheinen als die Grenzfläche 32 des Auskoppelelements 14. Das bedeutet, dass durch eine Variation der Größe der Grundfläche 78 die Helligkeit beeinflusst werden kann.

In einer bevorzugten Ausgestaltung ist vorgesehen, dass weiter von einer Lichtquelle entfernt angeordnete Auskoppelelemente eine größere Grundfläche 78 aufweisen als näher an einer Lichtquelle angeordnete Auskoppelelemente, um die Lichtaustrittsflächen der Auskoppelelemente untereinander gleich hell und damit homogen leuchtend erscheinen zu lassen.

Das Auskoppelelement 17 unterscheidet sich vom Auskoppelelement 14 insbesondere dadurch, dass eine Durchdringungslinie 80, längs der das Auskoppelelement 17 aus der Seite 26 des Lichtleiters 10 herausragt, einen Vorsprung 82 in einem Abschnitt der Durchdringungslinie 80 aufweist, der weder die die Lichtaustrittfläche bildende Grenzfläche 32 noch die Licht auf die Lichtaustrittsfläche 32 umlenkende Grenzfläche 30 begrenzt. Auch bei dieser Ausgestaltung wird die Grundfläche des Auskoppelelements im Vergleich zur Grundfläche des Auskoppelelements 14 vergrößert.

Das Auskoppelelement 17 bietet mit der Anordnung des Vorsprungs 82 einen weiteren Freiheitsgrad, in dem bestimmte Bereiche der als Störelement dienenden Grenzfläche 32 je nach Anordnung des Vorsprungs 82 und je nach Größe des Vorsprungs 82 gezielt stärker beleuchtet werden.

Das Auskoppelelement 19 zeichnet sich dadurch aus, dass eine Grenzfläche 84 des Auskoppelelements 19, die weder die Lichtaustrittsfläche 32 bildet noch die die Licht auf die Lichtaustrittfläche 32 umlenkende Grenzfläche 30 bildet, unter einem kleineren Winkel als 90 Grad aus der Seite 26 des Lichtleiters 10 herausragt.

Dieser Ausgestaltung erleichtert insbesondere ein Herauslösen eines durch Spritzgießen hergestellten Lichtleiters 10 aus einer Spritzgussform. In einer bevorzugten Ausgestaltung werden die hier vorgestellten Lichtleiter aus PMMA(Polymethylmethacrylat) oder PC (Polycarbonat) durch Spritzgießen hergestellt.

Eine bevorzugte Verwendung erfindungsgemäßer Lichtleiter ergibt sich bei Kraftfahrzeugleuchten, die entweder zur Beleuchtung des Innenraums des Kraftfahrzeugs dienen, oder die Signalfunktionen für andere Verkehrsteilnehmer erfüllen. Beispiele solcher Signalfunktionen sind das Tagfahrlicht, das Blinklicht, das Bremslicht und das Positionslicht, ohne dass diese Aufzählung als abschließend verstanden werden soll.

Entsprechend ihrer Funktion können solche Leuchten als Bugleuchten oder als Heckleuchten verwendet werden. Bugleuchten können darüber hinaus in Frontscheinwerfer des Kraftfahrzeugs integriert sein. Um variable Anforderungen an die Kosten und das Design solcher Leuchten sowie an die von den Leuchten zu erzeugenden Lichtverteilungen zu erfüllen, bieten sich zahlreiche Variationen der in dieser Anmeldung vorgestellten Gegenstände an.

So kann je nach Ausgestaltung eine Lichteinkopplung an einem oder an mehreren Enden eines erfindungsgemäßen Lichtleiters erfolgen.

An jeder Seite kann die Lichteinkopplung durch eine oder mehrere Lichtquellen erfolgen.

Die Lichtquellen sind bevorzugt Halbleiterlichtquellen, insbesondere Lumineszenzdioden.

Die Lichtfarbe aller Lichtquellen kann identisch sein. Dies bietet sich an, wenn der Lichtleiter mit weißem Licht als Tagfahrlicht oder als Blinklicht mit gelbem Licht betrieben soll.

Alternativ kann der Lichtleiter auch mit verschieden farbigen Lichtquellen gespeist werden, so dass er je nachdem, welche Lichtquellen eingeschaltet sind, verschiedene Lichtfunktionen erfüllen kann. In einer Ausgestaltung weist ein Lichtleiter weiße und gelbe Lichtquellen auf, wobei für einen Tagfahrlichtbetrieb nur die weißen und für einen Blinklichtbetrieb nur die gelben Lichtquellen eingeschaltet werden.

In einem Parallelisierungsabschnitt, in den das Licht der Lichtquellen in den Lichtleiter eingekoppelt wird, kann eine Parallelisierung des Lichtes erfolgen, wie sie in dieser Anmeldung beschrieben worden ist. In anderen Ausgestaltungen kann eine solche Parallelisierung auch weggelassen werden.

Der Lichtleiter selbst kann gerade oder gebogen, insbesondere ringförmig verlaufen, er kann stabförmig oder flächig sein und dabei insbesondere eine Neigung oder eine Verdrillung aufweisen.

Im Bezug auf Ausgestaltungen der Auskoppelelemente kann vorgesehen sein, dass die Größe der Auskoppelelemente mit ihrer Entfernung von der Lichtquelle zunimmt oder auch nicht zunimmt.

Darüber hinaus kann die als Störelement dienende Grenzfläche eben oder nicht eben sein. Ferner kann die als Lichtaustrittsfläche dienende Grenzfläche eben oder nicht eben sein. Bei einer nicht ebenen Ausführung der Austrittsfläche kann diese insbesondere konvex und damit bündelnd oder konkav und damit zerstreuend sein. Dies richtet sich nach der konkreten Lichtverteilung, die mit dem Lichtleiter erzeugt werden soll.

Darüber hinaus kann der Lichtleiter nur identische Auskoppelelemente aufweisen, oder er kann in einer anderen Ausgestaltung auch Auskoppelelemente mit unterschiedlichen Formen einzelner Elemente aufweisen.

Die Auskoppelelemente können dicht an dicht liegen oder auch mit einem Abstand voneinander angeordnet sein.

Darüber hinaus können die Auskoppelelemente sowohl lediglich auf einer Seite des Lichtleiters angeordnet sein, oder sie können auf mehreren Seiten des Lichtleiters, insbesondere auf einander gegenüber liegenden Seiten des Lichtleiters angeordnet sein.

Bei flächigen Lichtleitern können die Auskoppelelemente in Reihen, bzw. in regelmäßigen Anordnungen angeordnet sein, oder sie können auch ohne erkennbare Ordnung über die Fläche verteilt sein.

Die einzelnen Auskoppelelemente können dazu eingerichtet sein, jeweils fürs sich die vorgeschriebene Lichtverteilung zu erzeugen oder jeweils nur einen Teil der vorgeschrieben Lichtverteilung zu erzeugen. So kann zum Beispiel vorgesehen sein, dass in einer Anordnung von Auskoppelelementen einige Auskoppelelemente in eine erste Richtung, und andere Auskoppelelemente in eine andere Richtung strahlen, so dass sich erst in der Summe die gewünschte Lichtverteilung ergibt.

Eine weitere bevorzugte Ausgestaltung zeichnet sich dadurch aus, dass die Auskoppelelemente eine stark bündelnde Wirkung besitzen und dass die zu erzeugende Lichtverteilung mit einer nachgelagerten Streuscheibe erzeugt wird.

Eine weitere Ausgestaltung sieht vor, dass neben den hier vorgestellten Auskoppelelementen auch bekannte Auskoppelelemente in einem erfindungsmäßen Lichtleiter integriert sind, wobei die bekannten Auskoppelelemente Störelemente und Lichtaustrittsflächen aufweisen, die auf verschiedenen Seiten eines Lichtleiters angeordnet sind.

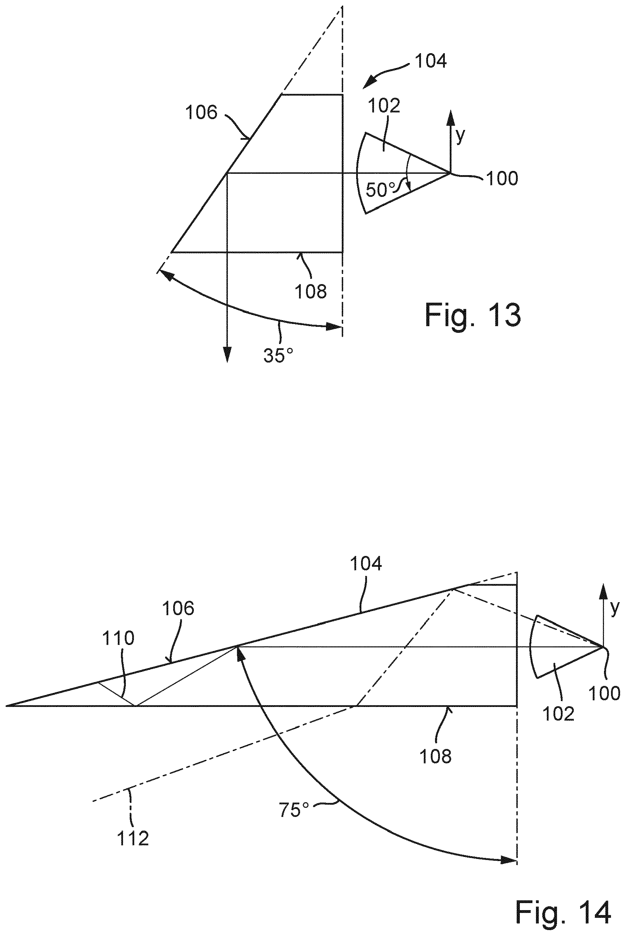

Im folgenden werden unter Bezug auf die Figuren 13 ff Ausgestaltungen vorgestellt, die sich durch Auskoppelelemente auszeichnen, bei denen Licht zunächst an einer ersten Reflexionsfläche und dann an einer zweiten Reflexionsfläche innerhalb des Auskoppelelements umgelenkt wird, bevor es über die Lichtaustrittsfläche des Auskoppelelements ausgekoppelt wird.

Diese Ausgestaltungen basieren auf den folgenden Erkenntnissen. Die unter Bezug auf die Figuren 1 bis 12 erläuterten Ausgestaltungen zeichnen sich dadurch aus, dass aus dem Lichtleiter 10 in ein Auskoppelelement eingetretenes Licht an der Reflexionsfläche des Auskoppelelements einmal reflektiert wird, bevor es über die Lichtaustrittsfläche des Auskoppelelements ausgekoppelt wird.

Bei der Umlenkung an der Reflexionsfläche kann das Licht dabei vergleichsweise viel Energie verlieren. Figur 13 soll dies verdeutlichen: eine Lichtquelle 100 strahlt einen Lichtkegel 102 mit gegebenem Öffnungswinkel (hier 50°) in ein sehr vereinfachtes Modell eines Lichtleiters 104. Im Lichtleiter 104 wird es an einer Reflexionsfläche 106 (Anstellwinkel 35°) teilweise intern total reflektiert und tritt an der Lichtaustrittsfläche 108 wieder aus. Der an der Reflexionsfläche 106 nicht total reflektierte Anteil geht durch Transmission durch die Reflexionsfläche 106 unter Brechung verloren.

Der verlorengehende Anteil hängt stark von dem Anstellwinkel der Reflexionsfläche ab. So hat der Erfinder durch Simulationsrechnungen festgestellt, dass der verlorengehende Anteil mit kleiner werdendem Anstellwinkel stark zunimmt. Für einen Lichtleiter wurde zum Beispiel festgestellt, dass der Quotient aus reflektierter Lichtenergie im Zähler und einfallender Lichtenergie im Nenner für einen Lichtkegel 102 mit einem Öffnungswinkel von 30° zwischen 100% für einen Anstellwinkel von 60° und 0% für einen Anstellwinkel von 35° variiert.

Ein solcher Quotient kann als Wirkungsgrad interpretiert werden. Für einen 50°-Lichtkegel 102 wurden Wirkungsgrade zwischen ca. 86% für einen 60°-Anstellwinkel und 2% für einen 35°-Anstellwinkel ermittelt. Der Wirkungsgrad hängt also stark von dem Anstellwinkel und nur wenig von dem Öffnungswinkel des Lichtkegels ab. Die starke Abhängigkeit des Wirkungsgrades von dem Anstellwinkel ist deshalb störend, weil der Anstellwinkel auch die Richtung definiert, in welche die über die Lichtaustrittsfläche 108 ausgekoppelte Lichtenergie abgestrahlt wird. Die Lage eines Lichtleiters im Scheinwerfer ist in der Regel einerseits nicht frei wählbar. Andererseits fordert das Gesetz jedoch bestimmte Lichtabstrahlrichtungen. Beide Forderungen zusammen führen daher unter Umständen zu erheblichen Wirkungsgradeinbußen.

Figur 14 veranschaulicht weitere Nachteile, die bei Auskoppelelementen mit nur einer Reflexionsfläche (bzw. einer Reflexion vor der Auskopplung) auftreten können. Für sehr große Anstellwinkel (hier 75°) wird zwar das gesamte Licht an der Reflexionsfläche 106 total reflektiert, ein großer Anteil 110 dieses Lichts trifft im Folgenden jedoch unter einem Winkel auf die Austrittsfläche 108, der die Bedingung für Totalreflexion erfüllt. Dieses Licht wird daher an der Lichtaustrittsfläche 108 erneut gespiegelt. Dies kann sich mehrfach wiederholen, bis an einer der beiden Flächen 106, 108 die Bedingung für die Totalreflexion verletzt wird. Dann tritt das Licht 110 in völlig unkontrollierter Weise aus und ist im allgemeinen nicht geeignet, zum Erfüllen der gesetzlichen Vorgaben beizutragen. Das Licht 112 repräsentiert dagegen einen regulär ausgekoppelten Lichtanteil.

Insgesamt führen die beiden oben geschilderten Effekte dazu, dass die Systeme für große und kleine Anstellwinkel der Reflexionsfläche 106 nur mit geringer Effektivität arbeiten.

Es besteht daher ein Bedürfnis für eine weitere Verbesserung, mit der die geschilderte Abhängigkeit des Wirkungsgrades vom Anstellwinkel der totalreflektierenden Fläche und damit von der Einbausituation im Fahrzeug eliminiert oder zumindest verringert wird. Dies wird bei den im Folgenden dargestellten Ausgestaltungen dadurch erreicht, dass ein Lichtleiter nach einem der Ansprüche 1 bis 10 spezielle Auskoppelelemente aufweist. Die speziellen Auskoppelelemente zeichnen sich durch eine Grenzfläche aus, die eine erste Reflexionsfläche und eine zweite Reflexionsfläche aufweist. Die Reflexionsflächen sind relativ zu einer Durchdringungsfläche, über die das Auskoppelelement aus der Seite des Lichtleiters herausragt, und relativ zu der Lichtaustrittsfläche in spezieller Weise angeordnet. Die Anordnung zeichnet sich dadurch aus, dass über die Durchdringungsfläche in das Auskoppelelement eintretendes Licht, das an der ersten Grenzfläche eine interne Totalreflexion erfährt, dort so auf die zweite Grenzfläche umgelenkt wird, dass es an der zweiten Grenzfläche eine weitere interne Totalreflexion erfährt, durch die es so auf die Lichtaustrittsfläche umgelenkt wird, dass es dort aus dem Auskoppelelement austritt.

Der Kern dieser vorteilhaften Ausgestaltungen besteht von der Wirkung her darin, dass man eine einzige Totalreflexion durch zwei Totalreflexionen ersetzt, wobei die Anstellwinkel der beteiligten Reflexionsflächen so gewählt werden, dass der Wirkungsgrad jedes Mal möglichst groß ist und bevorzugt bei 100% oder zumindest nahe bei 100% liegt.

Ferner wird die Lichtaustrittsfläche so angeordnet, dass das Licht dort nicht total reflektiert wird, sondern dass es dort gebrochen und durch Transmission ausgekoppelt wird. Bevorzugt ist ferner, dass eine und/oder beide total reflektierenden Reflexionsflächen und/oder die Lichtaustrittsfläche zur Formung des austretenden Lichtkegels genutzt werden, wodurch die zur Erreichung der gesetzlichen Vorgaben benötigte Lichtmenge minimiert werden kann. Auch dies trägt zu einer Wirkungsgradoptimierung bei.

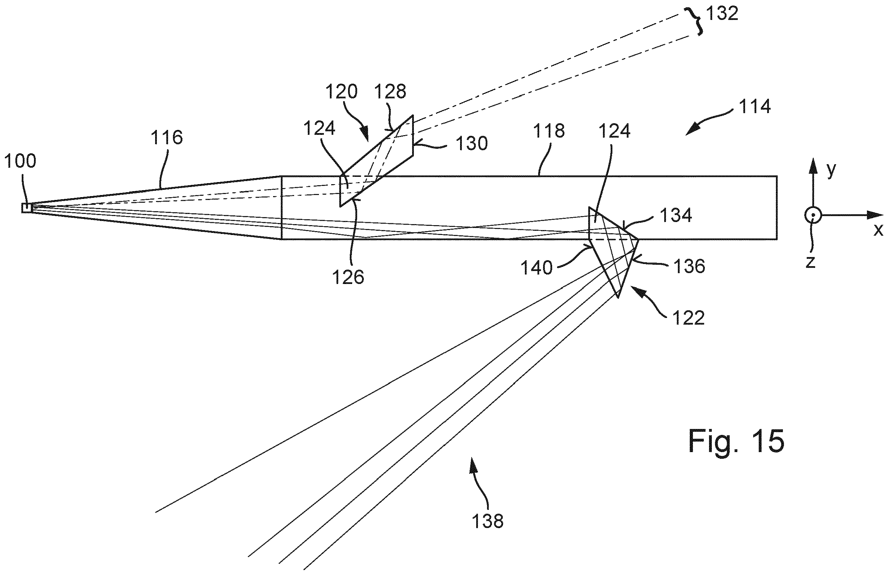

Die Figur 15 zeigt eine Draufsicht auf einen Lichtleiter 114. Das von einer Lichtquelle 100 abgestrahlte Licht tritt durch die Eintrittsfläche zunächst in einen Lichtleiterbereich 116 ein, dessen Querschnittsfläche mit zunehmendem Abstand von der Lichtquelle 100 ansteigt. Jede Spiegelung eines Strahls an einer der Seitenwände dieses Bereichs führt zu einer Verkleinerung des Winkels, den der Strahl mit der x-Richtung bildet. Nach diesem Parallelisierungsbereich 116 folgt ein Leitungsbereich 118 mit konstantem Querschnitt. Beide Bereiche 116, 118 sind der Übersichtlichkeit halber gerade verlaufend ausgebildet, das Ganze funktioniert aber natürlich ebenso mit gekrümmten Lichtleitern. Aufgesetzt auf den Leitungsbereich 118 sind zwei Auskoppelelemente 120, 122. Das näher an der Einkopplung, d.h. näher an der Lichtquelle 100 liegende Auskoppelelement 120 ist so ausgebildet, dass Strahlen, die in das Auskoppelelement 120 durch eine dreieckige, in der Oberfläche des Leitungsbereichs 118 liegende Durchdringungsfläche 124 oder Auflagefläche 124 in das Auskoppelelement 120 eintreten, nach zweimaliger Reflexion an als Reflexionsflächen dienenden Seitenwänden des Auskoppelelementes 120 durch die (hier ebene) Lichtaustrittsfläche 130 abgestrahlt werden.

Der kleine Abstrahlwinkel, den das ausgekoppelte Licht 132 mit der x-Richtung bildet, entspricht in etwa dem Winkel des regulär ausgekoppelten Anteils 112 in der Figur 14 (etwa 30°). Da der Anstellwinkel bei der Totalreflexion an den beiden Reflexionsflächen 126, 128 jeweils bei etwa 60° liegt, ergibt sich in beiden Fällen ein Wirkungsgrad von etwa 100%. Ferner trifft das zweimal reflektierte Licht so steil auf die Lichtaustrittsfläche 130, dass dort keine Totalreflexion stattfindet. Das Licht 132 tritt also auch zu nahezu 100% durch Transmission durch die Lichtaustrittsfläche 130 aus. Insgesamt ergibt sich für den Auskoppelprozeß also ebenfalls ein Wirkungsgrad von nahezu 100%. Dieses Auskoppelelement 120 stellt somit eine Lösung des im Zusammenhang mit der Figur 14 geschilderten Problems dar.

Im weiteren Verlauf des Lichtleiters folgt das zweite Auskoppelement 122. Dieses ist für eine Umlenkung um etwa 150° ausgelegt - ein Wert, der mit keiner anderen Technik erreicht werden kann. Bei einer vergleichbar großen, an einer einzigen Reflexionsfläche erfolgenden Umlenkung würde sich hier ein Wirkungsgrad in der Nähe von 0% ergeben. Der Anstellwinkel der ersten Reflexionsfläche 132 beträgt in der dargestellten Ausgestaltung 55°. Der Wirkungsgrad für die Reflexion eines engen Bündels liegt dann bei nahezu 100%. Die Richtungsänderung des dort reflektierten Lichtes beträgt 2 x (90°-55°) = 70°. Der Anstellwinkel der zweiten Reflexionsfläche beträgt 50°. Der Wirkungsgrad der Reflexion liegt dann für ein enges Bündel wiederum bei etwa 100%. Die Richtungsänderung des dort reflektierten Lichtes beträgt 2 x (90°- 50°) = 80°.

Die gesamte Richtungsänderung beträgt dann 70° + 80° = 150°. Da das Bündel nahezu senkrecht auf die Austrittsfläche 140 trifft, tritt dort keine Totalreflexion ein. Das ausgekoppelte Licht 132 verlässt den Lichtleiter 114 mit einer Transmission von nahezu 100%. Der Gesamtwirkungsgrad des Auskoppelements 122 beträgt somit auch in diesem Fall nahezu 100%. Ein wie in Figur 15 gestalteter Lichtleiter 114 veranschaulicht technische Zusammenhänge. Für eine Verwendung in einer Kraftfahrzeugbeleuchtungseinrichtung würde ein Lichtleiter noch Änderungen erfahren. Ein entsprechend geänderter Lichtleiter würde insbesondere eine Vielzahl von Auskoppelelementen aufweisen, die alle in die (nahezu) gleiche Richtung Licht abgeben, und die dicht an dicht über die gesamte Länge des Lichtleiters verteilt sind.

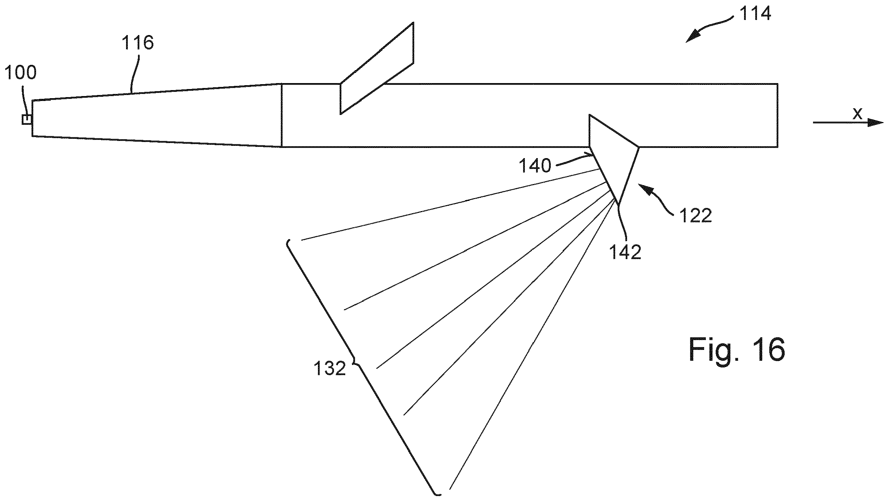

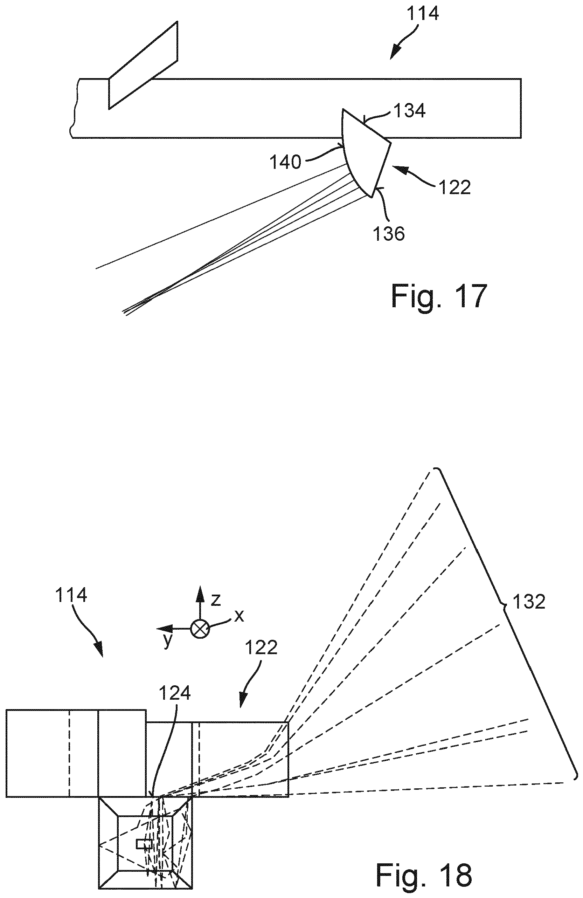

Figur 16 zeigt erneut den Lichtleiter 114 aus der Figur 15 mit folgenden Veränderungen: der Öffnungswinkel im Parallelisierungsbereich 116 wurde verringert, wodurch der Lichtkegel im Lichtleiter 114 und damit natürlich auch nach dem Verlassen einen deutlich größeren Öffnungswinkel aufweist. Weiterhin wurden die Strahlen im Lichtleiter nicht dargestellt. Im Folgenden soll nur das zweite Auskoppelelement 122 betrachtet werden. Wie man in Figur 16 deutlich erkennt, besteht zwischen dem Auskoppelort auf der Lichtaustrittsfläche 140 und dem gegenüber der x-Richtung gemessenen Auskoppelwinkel ein Zusammenhang: je näher der Auskoppelort an der Spitze 142 des Auskoppelements 122 liegt, umso größer ist der Winkel, den das ausgekoppelte Licht 132 mit der x-Richtung bildet. Diese Abhängigkeit erlaubt es, die Austrittsfläche 140 so umzugestalten, dass der Öffnungswinkel des ausgekoppelten Lichtes 132 verringert wird. Figur 17 zeigt dies beispielhaft: die ebene Lichtaustrittsfläche 140 aus der Fig. 16 wurde beim Gegenstand der Fig. 17 durch eine konvex gekrümmte Lichtaustrittsfläche 140 ersetzt. Alternativ oder ergänzend könnte man in analoger Weise natürlich auch eine der beiden Reflexionsflächen 134, 136 oder beide Reflexionsflächen 134, 136 mit einer Krümmung gestalten. Allerdings bietet sich die Lichtaustrittsfläche 140 am ehesten für eine gekrümmte Ausgestaltung an, weil dort der Ort-Winkel-Zusammenhang aufgrund des langen Weges, den das Licht im Auskoppelelement 122 zurückgelegt hat, am stärksten ausgeprägt ist.

Figur 18 zeigt erneut den Lichtleiter 114 aus der Figur 15. Die Blickrichtung verläuft parallel zur x-Richtung. Es ist zu erkennen, dass alle Strahlen des ausgekoppelten Lichtes 132 eine Aufwärtskomponente in z-Richtung aufweisen. Dies ergibt sich daraus, dass alle Strahlen, die über die Durchdringungsfläche 124 in ein Auskoppelelement 122 gelangen, das aus einer in z-Richtung oben liegenden Seite des Lichtleiters herausragt, eine z-Richtungskomponente aufweisen. Die gesetzlichen Vorgaben für Leuchten fordern allesamt eine Lichtverteilung, die in etwa symmetrisch zur Horizontalen liegt, die in der Fig. 18 parallel zu der x-y-Ebene liegt.

Um dies mit dem vorliegenden Lichtleiter 114 zu erreichen, bietet sich als einfachste Lösung die Möglichkeit an, den Lichtleiter 114 gekippt im Fahrzeug anzubringen.

Die zweite Möglichkeit besteht darin, eine Reflexionsfläche des Auskoppelelements entsprechend zu neigen, oder aber auch beide Reflexionsflächen oder aber eine oder beide Reflexionsflächen und die Lichtaustrittsfläche entsprechend zu neigen.

Eine dritte Möglichkeit besteht darin, eine Deckelfläche des Auskoppelelements zur Neutralisierung der Aufwärtstendenz zu verwenden.

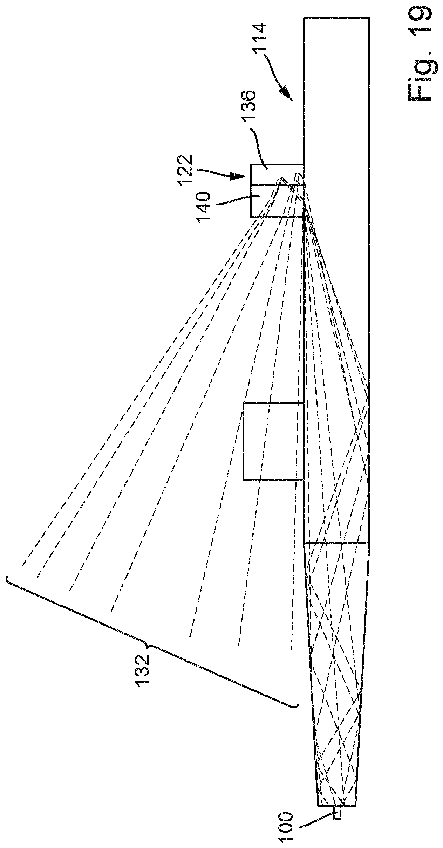

Eine vierte Möglichkeit nutzt analog zu dem unter Bezug auf die Fig. 16 erläuterten Vorgehen die Orts-Winkel-Abhängigkeit des ausgekoppelten Lichtes 132 beim Durchtritt durch die Lichtaustrittsfläche 140, wie sie exemplarisch in der Fig. 19 dargestellt ist. Natürlich kann auch hier die ebene Lichtaustrittsfläche zu einer in der x-z-Ebene konvexen Lichtaustrittsfläche 140 gekrümmt werden. In Verbindung mit einer in der x-y-Ebene konvexen Lichtaustrittsfläche führt diese Ausgestaltung sowohl in der Draufsicht als auch in der Seitenansicht zu einem Lichtkegel mit verringertem Öffnungswinkel. Als Ergebnis dieser weiteren Verformung ergibt sich in der Regel eine Freiformfläche, die horizontal und vertikal geschnitten jeweils eine konvex gekrümmte Kurve ergibt. In speziellen Fällen kann auch ein Abschnitt einer Kugel, eines Ellipsoiden oder einer Torusfläche oder eine diesen Flächen ähnliche Fläche den Anforderungen genügen.

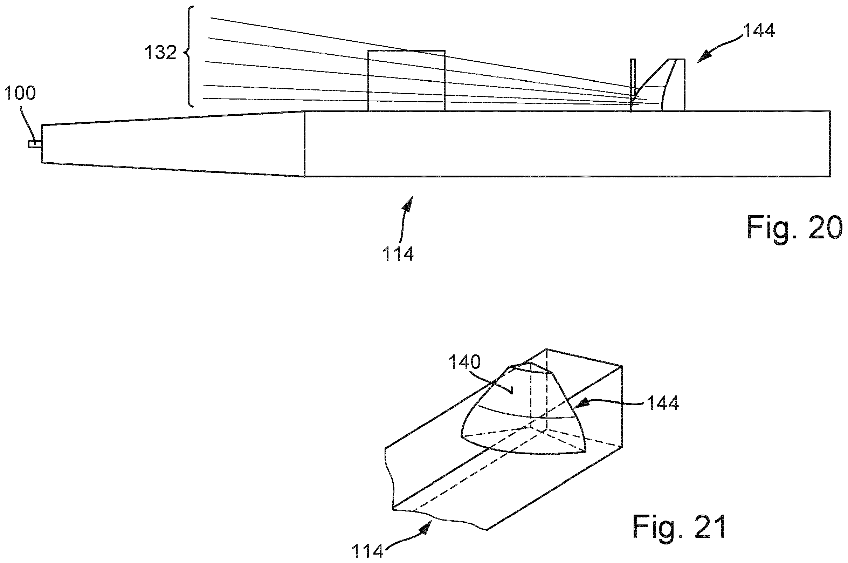

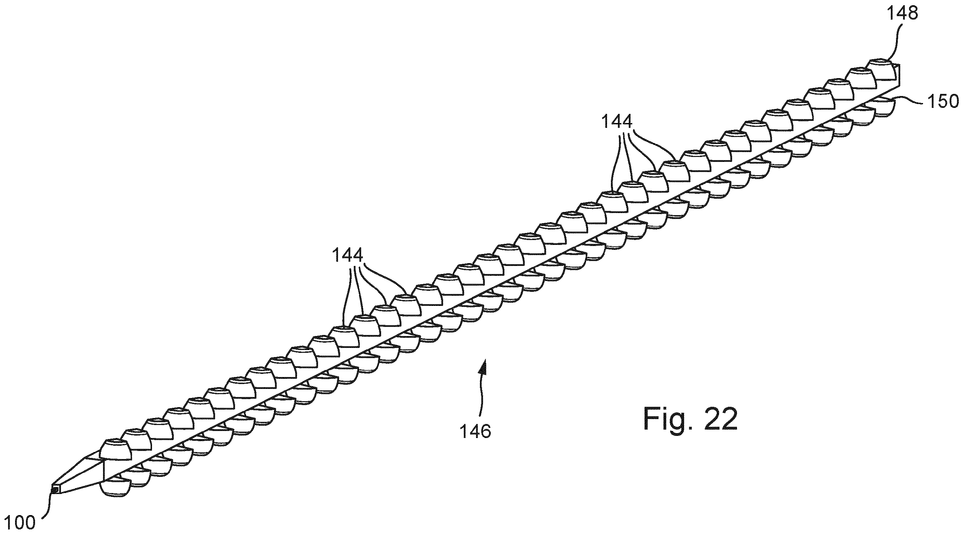

Figur 20 zeigt das entsprechend stärker gebündelte austretende Licht 132 aus den Figuren 18 und 19. Fig. 21 zeigt eine Schrägansicht einer zweifach im Raum konvex gekrümmten Lichtaustrittsfläche 140 eines neuartigen Lichtauskoppelelements 144. Figur 22 zeigt einen Lichtleiter 146 mit einer Vielzahl der neuartigen Auskoppelelemente 144. Insbesondere bei sehr großen oder sehr kleinen Umlenkwinkeln ist darauf zu achten, dass sich benachbarte Auskoppelelemente 144 nicht gegenseitig bestrahlen. Um dies zu vermeiden, kann der Abstand zwischen zwei Elementen 144 so groß gewählt werden, dass dieser unerwünschte Effekt vermieden wird. Falls in diesem Fall die insgesamt ausgekoppelte Lichtmenge nicht ausreicht, kann zusätzlich zu einer an einer Oberseite angeordneten ersten Reihe 148 von Auskoppelelementen 144 an der Unterseite des Lichtleiters 146 eine zweite Reihe 150 von Auskoppelelementen 144 platziert werden.

Um zu erreichen, dass alle Elemente für einen Betrachter gleich oder annähernd gleich hell erscheinen, kann die Größe der Elemente 144 mit zunehmendem Abstand von der Lichtquelle 100 vermindert werden. Alternativ gibt es die Möglichkeit, das Licht aus den weiter entfernten Elementen stärker zu bündeln, was beim Betrachter zum selben Ergebnis führt.

Die Serienentwicklung eines gekrümmten Lichtleiters ist sehr aufwändig, da alle Auskoppelelemente zum Aufbau der gesetzlich vorgegebenen Lichtverteilung beitragen müssen, was wiederum bedeutet, dass die Umlenkwinkel aller Elemente unterschiedlich sind und somit einzeln ausgelegt werden müssen. Weist der Lichtleiter zusätzlich eine Neigung gegenüber der Horizontalen auf, müssen auch die im Text zu den Figuren 16 bis 21 beschriebenen Arbeiten für jedes Element individuell ausgeführt werden. Wenn die Krümmung des Lichtleiters so verläuft, dass in einem Teilbereich eine Umlenkung erforderlich ist, die auch mit einem Reflexionselement effektiv zu erzielen ist, können natürlich diese unterschiedlichen Auskoppelelemente in Kombination mit den oben beschriebenen verwendet werden.

Eine weitere Ausgestaltung sieht vor, dass zusätzlich hinter dem Lichtleiter noch eine Lichtquelle angeordnet ist, welche den Lichtleiter durchleuchtet. Alternativ kann hinter dem Lichtleiter eine Fläche angeordnet werden, die Möglichkeiten zur Gestaltung gibt. Diese Fläche kann beispielsweise matt oder reflektierend ausgestaltet sein. Sie kann zum Beispiel eine metallisierte Oberfläche oder einfach eine eingefärbte Fläche aufweisen.

## Patentansprüche

1. Lichtleiter (10), der ein Licht längs einer Hauptausbreitungsrichtung (x) leitendes Volumen aufweist und der wenigstens ein eine Grenzfläche aufweisendes Auskoppelelement (14) aufweist, das Licht durch eine interne Totalreflexion an seiner Grenzfläche unter einem Winkel auf eine Lichtaustrittsfläche umlenkt, unter dem es dort aus dem Lichtleiter (10) austritt, wobei das Auskoppelelement (14) quer zu der Hauptausbreitungsrichtung (x) aus einer Seite (26) des Licht leitenden Volumens herausragt und wobei die Lichtaustrittsfläche (32) einen Teil der Grenzfläche des Auskoppelelements (14) bildet und wobei die als Lichtaustrittsfläche (32) dienende Grenzfläche aus der Seite (26) des lichtleitenden Volumens herausragt, aus der das Auskoppelement herausragt, **dadurch gekennzeichnet, dass** der Lichtleiter (34, 48) dazu eingerichtet ist, in einen Parallelisierungsabschnitt (36) des Lichtleiters eingekoppeltes Licht zu parallelisieren, und dass die Grenzfläche des Auskoppelelements (122) eine erste Reflexionsfläche (134) und eine zweite Reflexionsfläche (136) aufweist, die relativ zu einer Durchdringungsfläche (124), über die das Auskoppelelement (122) aus der Seite des Lichtleiters (114) herausragt, und relativ zu der Lichtaustrittssfläche (140) so angeordnet sind, dass über die Durchdringungsfläche (124) in das Auskoppelelement (122) eintretendes Licht, das an der ersten Grenzfläche (134) eine interne Totalreflexion erfährt, dort so auf die zweite Grenzfläche (136) umgelenkt wird, dass es an der zweiten Grenzfläche (136) eine weitere interne Totalreflexion erfährt, durch die es so auf die Lichtaustrittsfläche (140) umgelenkt wird, dass es dort aus dem Auskoppelelement (122) austritt.

2. Lichtleiter (10) nach Anspruch 1, **dadurch gekennzeichnet, dass** ein weder zum Richten des Lichtes auf die Lichtaustrittsfläche (32) noch als Lichtaustrittsfläche (32) dienender Teil (30.3) der Grenzfläche eines Auskoppelelements (14.2) dazu eingerichtet und angeordnet ist, Licht einzukoppeln, das über eine nicht als Lichtaustrittsfläche vorgesehene Grenzfläche (30.1) eines vorhergehenden Auskoppelelements (14.1) aus dem vorhergehenden Auskoppelelement (14.1) ausgetreten ist.

3. Lichtleiter (10) nach Anspruch 1 oder 2, **dadurch gekennzeichnet, dass** eine Durchdringungslinie (80), längs der das Auskoppelelement (14) aus der Seite (26) des Lichtleiters (10) herausragt, ein Dreieck bildet.

4. Lichtleiter (10) nach Anspruch 1 oder 2, **dadurch gekennzeichnet, dass** eine Durchdringungslinie (80), längs der das Auskoppelelement (15) aus der Seite (26) des Lichtleiters (10) herausragt, ein Viereck bildet.

5. Lichtleiter (10) nach Anspruch 1 oder 2, **dadurch gekennzeichnet, dass** eine Durchdringungslinie (80), längs der das Auskoppelelement (17) aus der Seite (26) des Lichtleiters (10) herausragt, einen Vorsprung (82) in einem Abschnitt der Durchdringungslinie (80) aufweist, der weder die die Lichtaustrittsfläche bildende Grenzfläche (32) noch die Licht auf die Lichtaustrittsfläche umlenkende Grenzfläche (30) begrenzt.

6. Lichtleiter (10) nach Anspruch 1 oder 2, **dadurch gekennzeichnet, dass** eine Grenzfläche (84) des Auskoppelelements (19), die weder die Lichtaustrittsfläche (32) noch die Licht auf die Lichtaustrittsfläche (32) umlenkende Grenzfläche (30) bildet, unter einem kleineren Winkel als 90° aus der Seite (26) des Lichtleiters (10) herausragt.

7. Lichtleiter (10) nach einem der vorhergehenden Ansprüche, **dadurch gekennzeichnet, dass** eine Größe der Auskoppelelemente mit zunehmender Entfernung der Auskoppelelemente von einem zur Einkopplung von Licht eingerichteten Einkoppelbereich des Lichtleiters zunimmt.

8. Lichtleiter (10) nach einem der vorhergehenden Ansprüche, **dadurch gekennzeichnet, dass** eine als Lichtaustrittsfläche des Auskoppelelements dienende Grenzfläche (32) eben ist.

9. Lichtleiter (10) nach einem der vorhergehenden Ansprüche, **dadurch gekennzeichnet, dass** eine als Lichtaustrittsfläche des Auskoppelelements dienende Grenzfläche (32) konvex oder konkav ist.

10. Verwendung eines Lichtleiters (10) nach einem der vorhergehenden Ansprüche, **dadurch gekennzeichnet, dass** die Verwendung bei einer Kraftfahrzeugleuchte erfolgt, die entweder zur Beleuchtung des Innenraums des Kraftfahrzeugs dient oder die Signalfunktionen für andere Verkehrsteilnehmer erfüllt.

11. Lichtleiter (114) nach Anspruch 1, **dadurch gekennzeichnet, dass** das Auskoppelement (122) dazu eingerichtet ist, die Reflexionen des Lichtes an der ersten Reflexionsfläche (134) und an der zweiten Reflexionsfläche (136) so erfolgen zu lassen, dass der Winkel zwischen dem Lot auf die jeweilige Reflexionsfläche und einem mittleren Strahl eines auf die jeweilige Reflexionsfläche einfallenden Lichtbündels in einem Winkelintervall liegt, in dem bei der Reflexion auftretende Verluste an Lichtenergie kleiner als 25%, insbesondere kleiner als 10 % sind.

12. Lichtleiter (114) nach Anspruch 11, **dadurch gekennzeichnet, dass** der Winkel größer als 45°, insbesondere größer als 50°, insbesondere größer als 55° ist.

13. Lichtleiter (114) nach Anspruch 12, **dadurch gekennzeichnet, dass** der Winkel kleiner als 75° ist.

## Claims

1. Light guide (10) which has a volume that guides light in a main propagation direction (x) and which has at least one out-coupling element (14) that comprises a boundary surface and deflects light to a light exit surface by means of total internal reflection at the boundary surface of said out-coupling element at an angle at which said light exits the light guide (10) at said light exit surface, the out-coupling element (14) protruding from one side (26) of the light-guiding volume transversely to the main propagation direction, and the light exit surface (32) forming a portion of the boundary surface of the out-coupling element (14), and the boundary surface that is used as the light exit surface (32) protruding from the side (26) of the light-guiding volume from which the out-coupling element protrudes, **characterized in that** the light guide (34, 48) is designed to parallelize light that is coupled into a parallelization portion (36) of the light guide, and **in that** the boundary surface of the out-coupling element (122) has a first reflection surface (134) and a second reflection surface (136) which are arranged relative to an intersection surface (124), by means of which the out-coupling element (122) protrudes from the side of the light guide (114), and relative to the light exit surface (140) such that light that enters the out-coupling element (122) through the intersection surface (124) and that is subjected to total internal reflection at the first boundary surface (134) is deflected to the second boundary surface (136) at this point such that it is again subjected to total internal reflection at the second boundary surface (136), by means of which it is deflected to the light exit surface (140) such that it exits the out-coupling element (122) at this point.

2. Light guide (10) according to claim 1, **characterized in that** a portion (30.3) of the boundary surface of an out-coupling element (14.2) that is used neither to direct the light to the light exit surface (32) nor as the light exit surface (32) is designed and arranged to couple light that has exited a preceding out-coupling element (14.1) through a boundary surface (30.1) of the preceding out-coupling element (14.1) that is not provided as a light exit surface.

3. Light guide (10) according to either claim 1 or claim 2, **characterized in that** an intersection line (80), along which the out-coupling element (14) protrudes from the side (26) of the light guide (10), forms a triangle.

4. Light guide (10) according to either claim 1 or claim 2, **characterized in that** an intersection line (80), along which the out-coupling element (15) protrudes from the side (26) of the light guide (10), forms a quadrilateral.

5. Light guide (10) according to either claim 1 or claim 2, **characterized in that** an intersection line (80), along which the out-coupling element (17) protrudes from the side (26) of the light guide (10), has a projection (82) in a part of the intersection line (80) which defines neither the boundary surface (32) forming the light exit surface nor the boundary surface (30) that deflects light to the light exit surface.

6. Light guide (10) according to either claim 1 or claim 2, **characterized in that** a boundary surface (84) of the out-coupling element (19) that forms neither the light exit surface (32) nor the boundary surface (30) deflecting light to the light exit surface (32) protrudes from the side (26) of the light guide (10) at an angle less than 90°.

7. Light guide (10) according to any of the preceding claims, **characterized in that** the out-coupling elements increase in size as the distance of the out-coupling elements from a coupling region of the light guide designed to couple light increases.

8. Light guide (10) according to any of the preceding claims, **characterized in that** a boundary surface (32) used as the light exit surface of the out-coupling element is planar.

9. Light guide (10) according to any of the preceding claims, **characterized in that** a boundary surface (32) used as the light exit surface of the out-coupling element is convex or concave.

10. Use of a light guide (10) according to any of the preceding claims, **characterized in that** said light guide is used for a motor vehicle light that either is used to light the interior of the motor vehicle or performs signal functions for other road users.

11. Light guide (114) according to claim 1, **characterized in that** the out-coupling element (122) is designed to reflect light at the first reflection surface (134) and at the second reflection surface (136) such that the angle between the vertical at the particular reflection surface and a central ray of a light beam incident on the particular reflection surface is at an angular interval in which losses of light energy that occur during reflection are less than 25%, in particular less than 10%.

12. Light guide (114) according to claim 11, **characterized in that** the angle is greater than 45°, in particular greater than 50°, in particular greater than 55°.

13. Light guide (114) according to claim 12, **characterized in that** the angle is less than 75°.

## Revendications

1. Conducteur lumineux (10) qui comprend un volume conduisant de la lumière le long d'une direction principale de propagation (x) et qui comprend au moins un élément de découplage (14) avec un interface, qui redirige de la lumière par une réflexion interne totale sur sa surface limite sous un angle vers une surface de sortie de lumière, sous lequel angle elle sort du conducteur lumineux (10), l'élément de découplage (14) dépassant transversalement à la direction principale de propagation d'un côté (26) du volume conduisant de la lumière et la surface de sortie de lumière (32) formant une partie de la surface limite de l'élément de découplage (14) et la surface limite servant comme surface de sortie de lumière (32) dépassant du côté (26) du volume conduisant de la lumière duquel dépasse l'élément de découplage, **caractérisé en ce que** le conducteur lumineux (34, 48) est adapté pour collimater de la lumière couplée dans un tronçon de parallélisation (36) du conducteur lumineux et **en ce que** la surface limite de l'élément de découplage (122) comprend une première surface de réflexion (134) et une deuxième surface de réflexion (136) qui est disposée par rapport à une surface de pénétration (124) de laquelle dépasse l'élément de découplage (122) du côté du conducteur lumineux (114), et par rapport à la surface de sortie de lumière (140) d'une façon telle que de la lumière entrant par la surface de pénétration (124) dans l'élément de découplage (122) et qui subit une réflexion interne totale sur la première surface limite (134), soit redirigée vers la deuxième surface limite (136) d'une façon telle qu'elle subisse sur la deuxième surface limite (136) une autre réflexion interne totale par laquelle elle est redirigée vers la surface de sortie de lumière (140) d'une façon telle qu'elle y sorte de l'élément de découplage (122).

2. Conducteur lumineux (10) selon la revendication 1, **caractérisé en ce qu'**une partie (30.3) de la surface limite d'un élément de découplage (14.2) ne servant ni à rediriger la lumière sur la surface de sortie de lumière (32) ni comme surface de sortie de lumière (32), est adaptée et disposée pour injecter de la lumière qui est sortie par une surface limite (30.1) non prévue comme surface de sortie de lumière d'un élément de découplage (14.1) précédent, de cet élément de découplage précédent (14.1).

3. Conducteur lumineux (10) selon la revendication 1 ou 2, **caractérisé en ce qu'**une ligne de pénétration (80) le long de laquelle l'élément de découplage (14) dépasse du côté (26) du conducteur lumineux (10), forme un triangle.

4. Conducteur lumineux (10) selon la revendication 1 ou 2, **caractérisé en ce qu'**une ligne de pénétration (80) le long de laquelle l'élément de découplage (15) dépasse du côté (26) du conducteur lumineux (10), forme un quadrilatère.

5. Conducteur lumineux (10) selon la revendication 1 ou 2, **caractérisé en ce qu'**une ligne de pénétration (80) le long de laquelle l'élément de découplage (17) dépasse du côté (26) du conducteur lumineux (10), forme une saillie (82) dans une partie de la ligne de pénétration (80) qui ne délimite ni la surface limite (32) formant la surface de sortie de lumière ni la surface limite (30) redirigeant de la lumière sur la surface de sortie de lumière.

6. Conducteur lumineux (10) selon la revendication 1 ou 2, **caractérisé en ce qu'**une surface limite (84) de l'élément de découplage (19) qui ne forme ni la surface de sortie de lumière (32) ni la surface limite (30) redirigeant de la lumière sur la surface de sortie de lumière (32), dépasse du côté (26) du conducteur lumineux (10) sous un angle inférieur à 90°.

7. Conducteur lumineux (10) selon l'une des revendications précédentes, **caractérisé en ce que** la taille des éléments de découplage croît avec l'éloignement des éléments de découplage d'une zone d'injection du conducteur lumineux agencée pour l'injection de lumière.

8. Conducteur lumineux (10) selon l'une des revendications précédentes, **caractérisé en ce qu'**une surface limite (32) servant comme surface de sortie de lumière de l'élément de découplage est plane.

9. Conducteur lumineux (10) selon l'une des revendications précédentes, **caractérisé en ce qu'**une surface limite (32) servant comme surface de sortie de lumière de l'élément de découplage est convexe ou concave.

10. Conducteur lumineux (10) selon l'une des revendications précédentes, **caractérisé en ce que** l'utilisation se fait sur un luminaire de véhicule automobile qui ni ne sert à l'éclairage de l'espace intérieur du véhicule automobile ni ne remplit la fonction de signalisation pour d'autres participants à la circulation routière.

11. Conducteur lumineux (10) selon la revendication 1, **caractérisé en ce que** l'élément de découplage (122) est agencé pour permettre aux réflexions de la lumière sur la première surface de réflexion (134) et sur la deuxième surface de réflexion (136) de se faire de façon telle que l'angle entre la perpendiculaire sur la surface de réflexion respective et un rayon moyen d'un faisceau de lumière incident est dans un intervalle d'angle dans lequel les pertes d'énergie lumineuse apparaissant lors de la réflexion sont inférieures à 25 %, notamment inférieures à 10 %.

12. Conducteur lumineux (10) selon la revendication 11, **caractérisé en ce que** l'angle est supérieur à 45°, notamment supérieur à 50°, notamment supérieur à 55°.

13. Conducteur lumineux (10) selon la revendication 12, **caractérisé en ce que** l'angle est inférieur à 75°.
